# EUROPEAN PATENT APPLICATION

(11) **EP 4 822 850 A1**
(43) Date of publication of application: **14.10.2026**
(21) Application number: 24923128.3
(22) Date of filing: 16.04.2024
(51) Int. Cl.: H01M 50/244, H01M 50/249, H01M 10/625, H01M 10/655, H01M 10/6556, H01M 50/289, H01M 10/6568

(54) **BATTERY AND ELECTRICAL DEVICE**

(30) Priority: 06.02.2024 CN 202410171696
(71) Applicant: Contemporary Amperex Technology Co., Limited, Ningde, Fujian 352100 (CN)
(72) Inventor: HUANG, Le, Ningde, Fujian 352100 (CN); ZHANG, Wei, Ningde, Fujian 352100 (CN); YU, Qian, Ningde, Fujian 352100 (CN)
(74) Representative: Ziebig Hengelhaupt Intellectual Property Attorneys Patentanwaltskanzlei PartGmbB
(86) International application number: PCT/CN2024/088066
(87) International publication number: WO 2025/166903

(57) **Abstract**

A battery and an electrical device, which belong to the technical field of batteries. The battery comprises a case assembly, a battery cell assembly and a heat exchange assembly, wherein the case assembly comprises a case and a first expansion beam arranged in the case, the space in the case being divided into a first space and a second space by means of the first expansion beam; the battery cell assembly is arranged in the case and located in the first space, the end of the battery cell assembly abutting against the first expansion beam; and the heat exchange assembly is arranged on the case assembly and comprises a heat exchange member, a current collector and an adapter, the heat exchange member and the battery cell assembly being arranged to allow heat exchange, the heat exchange member being in communication with the current collector, and the adapter being in communication with the current collector. A clearance space is formed between the first expansion beam and the case or on the first expansion beam; the current collector and the adapter are both arranged in the case, and at least one of the current collector and the adapter is at least partially located in the clearance space.

## Description

### CROSS-REFERENCE TO RELATED APPLICATIONS

The present application is proposed based on and claims the priority of the Chinese patent application with the application No. 202410171696.8 and the filing date of February 6, 2024, the entire contents of which are incorporated herein by reference.

### TECHNICAL FIELD

The present application relates to the technical field of batteries, in particular to a battery and an electrical apparatus.

### BACKGROUND

In recent years, new energy vehicles have made a leap forward in development. In the field of electric vehicles, batteries, as power sources of the electric vehicles, play an irreplaceable and important role. However, the energy density of the batteries needs to be further improved.

### SUMMARY OF THE INVENTION

Embodiments of the present application provide a battery and an electrical apparatus, which are conducive to increasing the energy density of the battery.

In a first aspect, an embodiment of the present application provides a battery, including: a case assembly, a battery cell assembly and a heat exchange assembly, wherein the case assembly includes a case and a first expansion beam arranged in the case, and a space in the case is divided into a first space and a second space by the first expansion beam; the battery cell assembly is arranged in the case and located in the first space, and an end of the battery cell assembly abuts against the first expansion beam; and the heat exchange assembly is arranged on the case assembly and includes a heat exchange member, a current collector and an adapter, the heat exchange member and the battery cell assembly are arranged to allow heat exchange, the heat exchange member is in communication with the current collector, and the adapter is in communication with the current collector. A clearance space is formed between the first expansion beam and the case or on the first expansion beam. The current collector and the adapter are both arranged in the case, and at least one of the current collector and the adapter is at least partially located in the clearance space.

In the above technical solution, on the one hand, by forming the clearance space between the first expansion beam and the case, or on the first expansion beam, to accommodate at least a portion of at least one of the current collector and the adapter, the occupation of the current collector and/or the adapter to the second space can be reduced, thereby saving the space and facilitating the arrangement of a battery management system and/or a high-voltage case in the second space, thus improving the space utilization rate; and on the other hand, given the size optimization of the second space, the size of the first space can be relatively increased, thereby increasing the number of battery cells electrically connected in the first space, further improving the space utilization rate and increasing the volumetric energy density of the battery.

In some embodiments, a side surface of the first expansion beam facing the first space is a first surface, at least a portion of the current collector is located in the clearance space, and a side surface of the current collector near the first space is flush with the first surface, or is disposed closer to the second space relative to the first surface.

In the above technical solution, by arranging at least a portion of the current collector in the clearance space and not protruding from the first expansion beam towards the direction of the first space, the arrangement of the current collector will not interfere with the abutting between the battery cell assembly and the first expansion beam, thereby simplifying the design and saving costs.

In some embodiments, a side surface of the first expansion beam facing the second space is a second surface, at least a portion of the current collector is located in the clearance space, and a side surface of the current collector near the second space is flush with the second surface, or is disposed closer to the first space relative to the second surface.

In the above technical solution, by arranging at least a portion of the current collector in the clearance space and not protruding from the first expansion beam towards the direction of the second space, the arrangement of the current collector will not occupy the second space, thereby further increasing the space utilization rate. Furthermore, when the current collector does not protrude from the first expansion beam towards the direction of the first space, nor towards the direction of the second space, the current collector can make fuller use of the space within the first expansion beam, thereby further increasing the space utilization rate so as to improve the volumetric energy density of the battery.

In some embodiments, the current collector is located in the clearance space, one end of the adapter is located in the clearance space and penetrates into the current collector to be in communication with the current collector, and the other end of the adapter extends into the second space.

In the above technical solution, by arranging the entire current collector in the clearance space, the occupation of the current collector to the second space can be reduced, effectively increasing the space utilization rate. Furthermore, by placing one end of the adapter in the clearance space to penetrate through the current collector, not only can the occupation to the second space be further reduced, but the communication between the current collector and the adapter can also be simplified, making assembly easier, saving parts, and improving the compactness of the fit between components.

In some embodiments, the adapter penetrates through the first expansion beam so that the other end of the adapter extends into the second space.

In the above technical solution, by arranging the adapter to penetrate through the first expansion beam, it is convenient for the end of the adapter to extend into the second space, thereby reducing the difficulty of operation, improving the assembly efficiency, and simplifying the design and processing difficulty of the case, without the need for special design and processing for penetration of the adapter.

In some embodiments, the clearance space includes a first clearance portion formed on the first expansion beam, and the first clearance portion opens towards the direction of the first space.

In the above technical solution, by providing the first clearance portion that opens towards the direction of the first space on the first expansion beam, it is convenient for the current collector to extend from one side of the first space towards the direction of the second space into the first clearance portion, which helps to reduce the difficulty of installing the current collector into the clearance space and improve assembly efficiency.

In some embodiments, the first clearance portion is formed as a recessed structure that is recessed towards the direction of the second space.

In the above technical solution, by arranging the first clearance portion as the recessed structure, the structural strength of the first expansion beam at the location where the first clearance portion is arranged can be improved, which is beneficial to protecting the current collector and/or the adapter in the clearance space, and the first clearance portion is convenient to process.

In some embodiments, the first expansion beam includes an outer beam plate and an inner beam plate, the inner beam plate is away from the second space relative to the outer beam plate and abuts against the battery cell assembly, the first clearance portion includes a first recessed portion formed on the inner beam plate, and the first recessed portion is recessed towards the direction of the second space.

In the above technical solution, by arranging the first expansion beam to include the outer beam plate and the inner beam plate, the reliability of the first expansion beam in supporting the battery cell assembly can be improved, and the cost and weight of the first expansion beam can be reduced. Moreover, by processing the first recessed portion on the inner beam plate of the first expansion beam on the side close to the battery cell assembly, the first recessed portion can be made to open towards the direction of the first space. Moreover, by processing the first recessed portion on a part of the inner beam plate to avoid the current collector and the adapter, it is not necessary to reduce the overall height of the inner beam plate and move it upward in order to avoid the current collector and the adapter. This allows the inner beam plate to maintain its original height and have a relatively large support range, thus achieving the better abutting effect for the battery cell assembly.

In some embodiments, the first expansion beam further includes a reinforcing plate supported between the outer beam plate and the inner beam plate, the first clearance portion further includes a second recessed portion formed on the reinforcing plate, and the second recessed portion corresponds to the first recessed portion and is recessed towards the direction away from the first recessed portion.

In the above technical solution, by arranging the reinforcing plate between the outer beam plate and the inner beam plate, the structural strength of the first expansion beam can be improved, which is beneficial to improving the supporting effect for the battery cell assembly. Moreover, by processing the second recessed portion on a part of the reinforcing plate to avoid the current collector and the adapter, it is not necessary to reduce the overall height of the reinforcing plate and move it upward in order to avoid the current collector and the adapter. This allows the reinforcing plate to maintain its original height and have a relatively large support range, thus achieving the better supporting effect for the battery cell assembly.

In some embodiments, the open area of the side of the first recessed portion facing the first space is smaller than the open area of the side of the second recessed portion close to the first space.

In the above technical solution, since the open area of the side of the first recessed portion facing the battery cell assembly is relatively small, it is beneficial to enlarging the abutting range between the inner beam plate and the battery cell assembly and improving the reliability of the battery. The open area of the side of the second recessed portion facing the first recessed portion is relatively large, which is beneficial for the first recessed portion to extend into the second recessed portion, reducing the assembly difficulty of the inner beam plate and the reinforcing plate and improving the assembly efficiency of the first expansion beam.

In some embodiments, the current collector is located in the clearance space, the adapter is in a bend form with one end located in the clearance space and penetrating through a top wall of the current collector, while the other end penetrating through the first expansion beam and extending into the second space, and a top wall of the first recessed portion is provided with an upper concave portion which accommodates the adapter.

In the above technical solution, by arranging the adapter in the bend form with one end located in the clearance space and penetrating through the top wall of the current collector, while the other end penetrating through the first expansion beam and extending into the second space, the assembly efficiency can be improved. Moreover, by arranging the upper concave portion on the top wall of the first recessed portion to avoid the adapter, the open area of the side of the first recessed portion facing the battery cell assembly can be further reduced, which is beneficial to enlarging the abutting range between the inner beam plate and the battery cell assembly and improving the reliability of the battery.

In some embodiments, the first expansion beam includes the outer beam plate and the inner beam plate arranged sequentially in a direction from the second space to the first space, and the reinforcing plate supported between the outer beam plate and the inner beam plate. The inner beam plate is provided with a first through hole, the reinforcing plate is provided with a second through hole, and the outer beam plate is provided with a third through hole. The first through hole, the second through hole, and the third through hole correspond to each other and are used for penetration by the adapter.

In the above technical solution, by arranging the first through hole on the inner beam plate, the second through hole on the reinforcing plate, and the third through hole on the outer beam plate, it is not necessary to reduce the height of any of the inner beam plate, the reinforcing plate, and the outer beam plate to avoid the adapter. This allows the inner beam plate, the reinforcing plate, and the outer beam plate to maintain their original heights and have a relatively large support range, thereby achieving the better supporting effect for the battery cell assembly.

In some embodiments, the side surface of the first expansion beam facing the first space is the first surface, a filler is provided at the first clearance portion, and an outer surface of the filler is flush with the first surface.

In the above technical solution, by arranging the filler to fill the space in the open surface of the first clearance portion that is not occupied by the heat exchange assembly, the filler can be used to support the corresponding position of the battery cell assembly at the missing position of the first expansion beam, thereby improving the overall supporting effect for the battery cell assembly and improving the reliability of the battery.

In some embodiments, a side of the first clearance portion facing a bottom wall of the case is open.

In the above technical solution, by arranging the first clearance portion to be open towards the bottom wall of the case, processing of the first clearance portion is facilitated, and the insertion of the current collector and/or the adapter into the first clearance portion is convenient, thereby improving assembly efficiency.

In some embodiments, the first expansion beam is constructed as a continuous beam that is continuous at a position corresponding to the clearance space.

In the above technical solution, since the first expansion beam is not a discontinuous multi-segment beam, the structural reliability of the first expansion beam can be improved, which is beneficial for supporting the battery cell assembly, and also facilitates the processing and assembly of the first expansion beam.

In some embodiments, the first expansion beam includes a first beam, the first beam includes a plurality of beam segments spaced apart in a length direction of the first expansion beam, and the clearance space includes a gap arranged between every two adjacent beam segments.

In the above technical solution, by arranging the first expansion beam to include the plurality of beam segments, and utilizing the gap between every two adjacent beam segments to avoid the current collector and/or the adapter, it is beneficial to achieving flexible assembly of the heat exchange assembly.

In some embodiments, the first expansion beam further includes a second beam, and the second beam is disposed away from the second space relative to the first beam, blocks the gaps and abuts against the battery cell assembly.

In the above technical solution, by arranging the first expansion beam as a combination of the first beam and the second beam, while the first beam is used to meet the requirement of avoiding the current collector and/or the adapter, the first beam may further be used to support the second beam, and the second beam is used to support the battery cell assembly. This is beneficial to improving the supporting effect of the first expansion beam for the battery cell assembly and improving the reliability of the battery.

In some embodiments, the second beam is an extruded hollow beam.

In the above technical solution, the second beam is easy to process and has good reliability, which helps to improve the supporting effect of the first expansion beam for the battery cell assembly and improve the reliability of the battery.

In some embodiments, the clearance space includes a second clearance portion, the second clearance portion is formed by recessing of an upper surface of a bottom wall, at least a portion of the second clearance portion is located below the first expansion beam, and at least a portion of the current collector is embedded in the second clearance portion.

In the above technical solution, since the second clearance portion is in the groove form, it is beneficial to improving the airtightness of the case and reducing the sealing difficulty of the case. Furthermore, when the clearance space includes both the first clearance portion formed on the first expansion beam and the second clearance portion formed on the bottom wall of the case, the volume of the clearance space can be increased, which is more conducive to accommodating the current collector. Moreover, by providing the second clearance portion on the bottom wall of the case to accommodate at least a portion of the current collector, the size of the first clearance portion can be relatively smaller, which helps to reduce the open area of the side of the first recessed portion facing the battery cell assembly, and helps to enlarge the abutting range between the inner beam plate and the battery cell assembly, thereby improving the reliability of the battery.

In some embodiments, the second clearance portion includes a first groove segment located below the first expansion beam and a second groove segment disposed away from the second space relative to the first groove segment, wherein the size of the second groove segment is larger than the size of the current collector in the direction from the first groove segment to the second groove segment.

In the above technical solution, by arranging the size of the second groove segment to be larger than the size of the current collector, the second groove segment can pre-accommodate the current collector, so that the current collector can be installed into the first groove segment with only a simple action of horizontal pushing, thereby reducing the assembly difficulty and improving the assembly efficiency.

In some embodiments, the heat exchange member is located inside the case and between the bottom wall of the case and the battery cell assembly.

In the above technical solution, by placing the heat exchange member inside the case, compared to placing the heat exchange member outside the case, the heat exchange member can more fully exchange heat with the battery cell assembly, thereby improving the temperature regulation efficiency for the battery cell assembly and reducing the waste of heat or cold. Furthermore, placing the heat exchange member inside the case facilitates the connection between the heat exchange member and the current collector inside the case compared to placing it outside the case, thereby reducing the sealing difficulty of the case and improving the airtightness of the battery.

In some embodiments, a bottom surface of the current collector is lower than a bottom surface of the heat exchange member, and the end of the heat exchange member near the second space penetrates through a side wall of the current collector facing the first space.

The above technical solution facilitates the connection between the current collector and the heat exchange member, improving assembly efficiency. Furthermore, if the upper surface of the bottom wall of the case has the recessed second clearance portion at the moment, at least a portion of the current collector may be arranged within the second clearance portion, which helps to reduce the lifting height of the current collector relative to the bottom wall, reduce the distance between the heat exchange member and the bottom wall, and reduce occupation of the first space by the heat exchange member. Furthermore, when the second clearance portion includes the first groove segment located below the first expansion beam and the second groove segment disposed away from the second space relative to the first groove segment, and the size of the second groove segment is larger than the size of the current collector in the direction from the first groove segment to the second groove segment, the heat exchange member and current collector assembled together may be installed in place by being pushed horizontally in the direction from the first space to the second space during assembly, without the need for other turning or lifting operations, thereby reducing assembly difficulty and improving assembly efficiency.

In some embodiments, the upper surface of the bottom wall has a recessed sink, and the heat exchange member is in embedded fitting with the sink.

The above technical solution can reduce the space occupied by the heat exchange assembly inside the case, which is beneficial to improving the battery capacity. This also helps improve the stability of the fit between the heat exchange member and the case, thereby improving the reliability of the heat exchange member in regulating the temperature of the battery cell assembly.

In some embodiments, an insulating layer is provided on each of the upper surface of the bottom wall and an outer surface of the heat exchange member, and insulating adhesives fill the space between the bottom wall and the battery cell assembly.

The above technical solution can improve the insulation between the heat exchange member and the battery cell assembly, thereby improving the reliability of the battery. Moreover, by arranging the insulating adhesives, the stable connection of the battery cell assembly, the heat exchange member, and the case can be achieved, thereby improving the stability and reliability of heat exchange between the heat exchange member and the battery cell assembly.

In some embodiments, the battery further includes: at least one of a first temperature regulating element, a second temperature regulating element, and a third temperature regulating element, wherein the first temperature regulating element is disposed inside the case assembly and at the top of the battery cell assembly; the second temperature regulating element is disposed between large surfaces of adjacent battery cells in the battery cell assembly; and the third temperature regulating element is disposed outside the case and below the bottom wall of the case.

In the above technical solution, the temperature regulating elements can be arranged at suitable locations according to the actual situation to meet the temperature regulation requirements of the battery.

In some embodiments, the case assembly includes a bottom protective plate located under the case, and the heat exchange member is located outside the case and between the bottom wall of the case and the bottom protective plate.

In the above technical solution, by placing the heat exchange member outside the case, there is no need to consider the insulation problem between the heat exchange member and the battery cells inside the case, thereby simplifying the insulation design of the heat exchange member, reducing the processing difficulty and production cost, solving the short circuit problem between the battery cells and the heat exchange member, and improving the reliability of the battery. Moreover, by placing the heat exchange member outside the case, the heat exchange member will not occupy the space inside the case, so that the battery capacity will not be reduced due to the installation of the heat exchange member, thus better ensuring the battery capacity. Furthermore, by placing the heat exchange member under the bottom wall of the case, the heat exchange member can exchange heat with the battery cell assembly within a larger range, improving the temperature regulation effect and efficiency of the battery cell assembly. In addition, by arranging the bottom protective plate under the heat exchange member, the heat exchange member can be reliably protected, reducing the risk of damage to the heat exchange member from impacts and bumps, and improving the working reliability of the heat exchange member.

In some embodiments, the heat exchange member is connected to the current collector via a connecting pipe that penetrates through the bottom wall.

In the above technical solution, by arranging the current collector inside the case and placing the heat exchange member outside the case, and by arranging the connecting pipe that penetrates through the case to enable the current collector and the heat exchange member to communicate, the communication between the current collector and the heat exchange member is facilitated, and the installation of the current collector and the heat exchange member is also facilitated.

In some embodiments, the case assembly further includes: a seal, the seal is located between the bottom wall and the bottom protective plate in sealing fit and includes an outer periphery arranged surrounding the heat exchange member, and the connecting pipe, corresponding to an in-ring region of the outer periphery, penetrates through the bottom wall.

In the above technical solution, by arranging the position of the connecting pipe penetrating through the bottom wall in the region surrounded by the outer periphery, when the outer periphery is arranged between the bottom wall and the bottom protective plate in sealing fit, muddy water, particles and other substances outside the case assembly are not prone to penetrating through the outer periphery into the space between the bottom wall and the bottom protective plate, and entering the case by flowing to the position where the connecting pipe penetrates through the bottom wall, thereby improving the reliability of the battery. Furthermore, because the heat exchange member is surrounded by the outer periphery, muddy water, particles, and other substances outside the case assembly are less likely to penetrate through the outer periphery and enter the space between the bottom wall and the bottom protective plate to contaminate or corrode the heat exchange member between the bottom wall and the bottom protective plate, thereby improving the reliability and extending the service life of the heat exchange member.

In some embodiments, a base adhesive layer is provided between the heat exchange member and the bottom wall, and a base adhesive layer is provided between the heat exchange member and the bottom protective plate.

In the above technical solution, on the one hand, the stability of heat transfer between the heat exchange member and the bottom wall can be improved, and on the other hand, the protective properties of the two side surfaces of the heat exchange member can be improved, thus protecting the heat exchange member.

In some embodiments, the heat exchange member includes at least one heat exchange tube which extends in a bent mode. The case assembly further includes: a foaming element. The foaming element is disposed between the bottom wall and the bottom protective plate, and includes a first foaming portion disposed around the heat exchange member, and a second foaming portion disposed between adjacent tube segments of the same heat exchange tube or between adjacent heat exchange tubes.

In the above technical solution, the foaming element can be used to fill the space between the bottom wall and the bottom protective plate where the heat exchange member is removed, that is, it is complementary to the heat exchange member. Thus, the foaming element can support the bottom wall and the bottom protective plate. When the protective plate is impacted, the foaming element can buffer the impact force and reduce the force of the bottom protective plate impacting the heat exchange member or the case, thereby protecting the heat exchange member and the battery cell assembly inside the case. Moreover, the foaming element can also fill gaps between the heat exchange tubes, which can support and limit the positions of the heat exchange tubes, so that the heat exchange tubes can be stably positioned to achieve stable temperature regulation.

In some embodiments, the foaming element is connected to the bottom protective plate, and an upper surface of the heat exchange member is higher than an upper surface of the foaming element.

In the above technical solution, a side surface of the heat exchange member facing the bottom wall is positioned closer to the bottom wall than a side surface of the foaming element facing the bottom wall. Thus, this may reduce the molding difficulty of the foaming element and help control the thickness uniformity of the foaming element. The arrangement of the foaming element will not interfere with the heat transfer fit between the heat exchange member and the bottom wall, thereby improving the stability and reliability of heat transfer between the heat exchange member and the bottom wall. This is beneficial to improving the temperature regulation effect of the battery cell assembly and thus improving the working reliability of the battery.

In some embodiments, the battery further includes: at least one of a first temperature regulating element, a second temperature regulating element, and a fourth temperature regulating element, wherein the first temperature regulating element is disposed inside the case assembly and at the top of the battery cell assembly; the second temperature regulating element is disposed between large surfaces of adjacent battery cells in the battery cell assembly; and the fourth temperature regulating element is disposed inside the case and located between the bottom wall and the battery cell assembly.

In the above technical solution, the temperature regulating elements can be arranged at suitable locations according to the actual situation to meet the temperature regulation requirements of the battery.

In some embodiments, the case is an integrally stamped part and includes a bottom wall and a surrounding wall, with the heat exchange member laid on the bottom wall.

In the above technical solution, by laying the heat exchange member on the bottom wall, the heat exchange area between the heat exchange member and the battery cell assembly can be increased, thereby improving the temperature regulation effect for the battery cell assembly. Moreover, since the bottom wall and the surrounding wall of the case are integrally stamped, there is no need to consider sealing issues at the connection between the bottom wall and the surrounding wall, which can ensure a sealing effect. This can prevent muddy water from seeping into the case from the connection between the bottom wall and the surrounding wall and affecting the battery cell assembly inside the case, thereby improving the reliability of the battery. Moreover, the integrally stamped case eliminates the need for splicing, which can improve production efficiency.

In some embodiments, the heat exchange member includes a plurality of heat exchange channels arranged in parallel.

In the above technical solution, since the heat exchange member includes the plurality of heat exchange channels arranged in parallel, when the total length of the channels required by the heat exchange member is fixed, the length of each heat exchange channel can be relatively short, which is conducive to improving the overall heat exchange efficiency of the heat exchange member and improving the temperature regulation effect of the heat exchange member for the battery cell assembly.

In some embodiments, two current collectors are provided, namely a first current collector and a second current collector, a first end of each heat exchange channel converges to and communicates with the first current collector, and a second end of each heat exchange channel converges to and communicates with the second current collector.

In the above technical solution, the first current collector and the second current collector are disposed, the first end of each heat exchange channel converges to and communicates with the first current collector, and the second end of each heat exchange channel converges to and communicates with the second current collector. In this way, one of the first current collector and the second current collector can be used as a liquid inlet current collector and the other can be used as a liquid outlet current collector. There is no need to arrange two channels with opposite flow directions in each current collector, so the structure of the current collector can be simplified and the reliability can be improved. Moreover, by correspondingly converging the two ends of each of the plurality of heat exchange channels to the two current collectors respectively, the number of the current collectors can be reduced, thereby lowering material costs.

In some embodiments, one current collector is provided and includes a plurality of first channel ports and a plurality of second channel ports that are isolated from each other. The plurality of first channel ports are in communication with each other, and the plurality of second channel ports are in communication with each other. The plurality of second channel ports are located on both sides of the plurality of first channel ports respectively. First ends of the plurality of heat exchange channels correspond to and are connected to the plurality of first channel ports one by one, and second ends of the plurality of heat exchange channels correspond to and are connected to the plurality of second channel ports one by one.

The above technical solution can reduce the number of the current collectors, allowing only one clearance space to be formed and located in a concentrated position, which helps to reduce sealing difficulty, reduce assembly difficulty, improve production efficiency, and improve the reliability of the battery.

In some embodiments, the heat exchange member includes at least one first heat exchange channel, the first heat exchange channel includes a first heat exchange section, a second heat exchange section and a third heat exchange section, the second heat exchange section is bent to form a first U-shaped region, the first heat exchange section is disposed within the first U-shaped region in a bent mode, and is connected to the second heat exchange section in a bent mode through the third heat exchange section, and the second heat exchange section is located on the outermost peripheral side of the first heat exchange channel.

In the above technical solution, the second heat exchange section is bent to form the first U-shaped region, the first heat exchange section is bent and disposed within the first U-shaped region, and the second heat exchange section is arranged to be located on the outermost peripheral side of the first heat exchange channel. Therefore, when the heat exchange member and the battery cell assembly in the present embodiment are adopted to exchange heat, at least a portion of the first U-shaped region formed by the peripheral second heat exchange section can be aligned with at least part of the battery cells on the periphery of the battery cell assembly, so that the second heat exchange section can exchange heat with at least part of the battery cells on the periphery of the battery cell assembly. The first heat exchange section within the first U-shaped region can be aligned with the internal battery cells, so that the heat exchange member can compensate for an internal and external temperature difference caused by heat exchange between the peripheral battery cells and the environment, making the heat exchange effect of the battery cells on the periphery of the battery cell assembly and the battery cells inside the battery cell assembly more consistent. This is beneficial for ameliorating the temperature difference of the battery cell assembly in different environments, improving the temperature uniformity of the battery, and thus extending the battery's service life to a certain extent.

In some embodiments, the battery cell assembly includes a plurality of battery units arranged along a first direction, each battery unit includes a plurality of battery cells stacked sequentially along a second direction, and at least a portion of the second heat exchange section exchanges heat correspondingly with the plurality of battery cells located at the outermost periphery of the battery cell assembly.

In the above technical solution, by coordinating the arrangement of the battery cells and extending the arrangement of the first heat exchange channels, and arranging at least a portion of the second heat exchange section to exchange heat correspondingly with the peripheral battery cell group, the heat exchange efficiency of the peripheral battery cell group can be improved, thereby further balancing the temperature difference caused by the heat dissipation of the peripheral battery cells being greater than that of the inner battery cells of the battery assembly.

In some embodiments, the heat exchange member further includes at least one second heat exchange channel, the second heat exchange channel and the first heat exchange channel are bent in the same plane, and the second heat exchange channel is arranged within the first U-shaped region of the first heat exchange channel in a bent mode.

In the above technical solution, by arranging the at least one first heat exchange channel and the at least one second heat exchange channel, and by coordinating their relative positions, the arrangement of the heat exchange channels can be designed according to the cooling requirements of the battery, thereby further optimizing the temperature regulation effect for the battery cell assembly and improving the temperature uniformity of the battery.

In some embodiments, at least one second heat exchange channel is bent to form a second U-shaped region, and at least a portion of the first heat exchange section is disposed within the second U-shaped region of the second heat exchange channel.

In the above technical solution, by arranging the at least one second heat exchange channel to be bent to form the second U-shaped region, and disposing at least a portion of the first heat exchange section within the second U-shaped region of the second heat exchange channel, coordination between the first heat exchange channel and the second heat exchange channel is facilitated, so that the temperature uniformity of the battery is further improved.

In some embodiments, the heat exchange member includes at least one heat exchange tube which extends in a bent mode, one heat exchange channel is defined in each heat exchange tube, and the heat exchange tube is of a flat tube structure.

In the above technical solution, the heat exchange member of the flat tube structure occupies a small space, which is beneficial for increasing the battery capacity, and lowering the weight, volume and cost of the battery.

In a second aspect, an embodiment of the present application further provides an electrical apparatus, including the battery according to any of the above solutions.

In the above technical solution, as manufacturing performance of the battery is improved to some extent, it is conducive to improving the performance of the electrical apparatus.

### BRIEF DESCRIPTION OF THE DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a schematic structural view of a vehicle according to some embodiments of the present application;
FIG. 2 is a structural exploded view of a battery according to some embodiments of the present application;
FIG. 3 is a diagram of a partial structure of a battery according to some embodiments of the present application;
FIG. 4 is a schematic diagram of an orthographic projection of the partial structure of the battery shown in FIG. 3;
FIG. 5 is a schematic diagram of a heat exchange assembly according to some embodiments of the present application;
FIG. 6 is an enlarged view of a portion A circled in FIG. 5;
FIG. 7 is a diagram of a partial structure of a battery according to some embodiments of the present application;
FIG. 8 is an enlarged view of a portion B circled in FIG. 7;
FIG. 9 is a section view along a line C-C in FIG. 4;
FIG. 10 is a diagram of a partial structure of a battery according to some embodiments of the present application;
FIG. 11 is an enlarged view of a portion D circled in FIG. 4;
FIG. 12 is a partial section view of a battery according to some embodiments of the present application;
FIG. 13 is a schematic diagram of cooperation of a heat exchange assembly and an outer beam plate according to some embodiments of the present application;
FIG. 14 is an enlarged view of a portion E circled in FIG. 13;
FIG. 15 is an exploded view of a first expansion beam according to some embodiments of the present application;
FIG. 16 is an exploded view of the first expansion beam in FIG. 15 from another angle;
FIG. 17 is a diagram of a partial structure of a battery according to some embodiments of the present application;
FIG. 18 is an enlarged view of a portion F circled in FIG. 17;
FIG. 19 is a schematic diagram of an orthographic projection of a partial structure of a battery according to some embodiments of the present application;
FIG. 20 is a section view along a line G-G in FIG. 19;
FIG. 21 is a schematic diagram of an orthographic projection of the partial structure of the battery shown in FIG. 19;
FIG. 22 is a partial section view of a battery according to some embodiments of the present application;
FIG. 23 is a partial section view of a battery according to some other embodiments of the present application;
FIG. 24 is an exploded view of part of components of a battery according to some embodiments of the present application;
FIG. 25 is an exploded view of part of components of a battery according to some embodiments of the present application;
FIG. 26 is a partial section view of a battery according to some embodiments of the present application;
FIG. 27 is a partial section view of a battery according to some further embodiments of the present application;
FIG. 28 is an exploded view of a heat exchange assembly according to some embodiments of the present application;
FIG. 29 is a schematic diagram of cooperation of a heat exchange member and a battery cell assembly according to some embodiments of the present application;
FIG. 30 is an exploded view of a current collector and an adapter according to some embodiments of the present application;
FIG. 31 is a section view of a current collector according to some embodiments of the present application;
FIG. 32 is a schematic diagram of a heat exchange member according to some embodiments of the present application;
FIG. 33 is a schematic diagram of a heat exchange member according to some other embodiments of the present application.

Reference numerals: Vehicle 1000; Battery 100; Controller 200; Motor 300; case assembly 1; First direction X; Second direction Y; Third direction Z; Clearance space 10; case 11; First space 111; Second space 112; Bottom wall 113; Second clearance portion 1131; First groove segment 11311; Second groove segment 11312; Sink 1132; Surrounding wall 114; case cover 12; First expansion beam 13; First clearance portion 131; First surface 132; Second surface 133; Inner beam plate 134; First recessed portion 1341; Upper concave portion 13411; First through hole 1342; Outer beam plate 135; Third through hole 1352; Reinforcing plate 136; Second recessed portion 1361; Second through hole 1362; Filler 137; Outer surface of filler 1371; First beam 138; Beam segment 1381; Gap 1382; Second beam 139; Second expansion beam 14; Third expansion beam 15; Bottom protective plate 16; First protective plate 161; Second protective plate 162; Foaming element 17; First foaming portion 171; Second foaming portion 172; Seal 18; Outer periphery 181; Base adhesive layer 19; Battery cell assembly 2; Battery unit 20; Battery cell 21; End of battery cell 22; Heat exchange assembly 3; Heat exchange member 31; Heat exchange channel 311; First end 311a; Second end 311b; First heat exchange channel 3110; First heat exchange section 3111; Second heat exchange section 3112; Third heat exchange section 3113; First U-shaped region Z1; First section R1; Second section R2; Third section R3; Fourth section R4; Second heat exchange channel 3114; Second U-shaped region Z2; Heat exchange tube 312; Current collector 32; Surface I 321; Surface II 322; First current collector 32a; Second current collector 32b; First channel port 32c; Second channel port 32d; Tube body 323; Partition structure 324; Blocking structure 325; First channel 3231; Second channel 3232; Adapter 33; Insulating layer 34; Insulating adhesive 35; Connecting pipe 36; First seal 37; Second seal 38; Adapter pipe 4; First temperature regulating element 51; Second temperature regulating element 52; Third temperature regulating element 53; and Third temperature regulating element 54.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All other embodiments obtained by those of ordinary skill in the art based on the embodiments in the present application without any creative effort shall fall within the scope of protection of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "have" and any variations thereof in the specification and the claims of the present application as well as the above description of the drawings are intended to cover non-exclusive inclusions. The terms "first," "second," and the like in the specification and the claims of the present application as well as the above drawings are used to distinguish different objects, rather than to describe a specific order or primary-secondary relationship.

Reference in the present application to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting," "connecting," "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is merely an association that describes the associated object, indicating that there can be three kinds of relationships, for example, A and/or B may denote the following three situations: A exists alone, A and B exist at the same time, and B exists alone. In addition, the character "/" in the present application generally means that the associated objects before and after it are in an "or" relationship.

In the embodiments of the present application, the same reference numerals denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, the phrase "a plurality of" means two or more.

In the present application, the battery cell may include a lithium-ion secondary battery, a lithium-ion primary battery, a lithium sulfur battery, a sodium lithium-ion battery, a sodium-ion battery or a magnesium-ion battery and so on. This is not limited in the embodiments of the present application. The battery cell may be in a cylindrical shape, a flat shape, a cuboid shape or another shape, which is also not limited in the embodiments of the present application. The battery cells are generally classified into three types depending on the way of encapsulation: cylindrical battery cells, square battery cells and pouch battery cells, which are also not limited in the embodiments of the present application.

The battery mentioned in the embodiments of the present application refers to a single physical module including one or a plurality of battery cells to provide a higher voltage and capacity. The battery usually includes a case assembly for encapsulating one or a plurality of battery cells or one or a plurality of battery modules. The battery module usually includes a plurality of battery cells. The case assembly can reduce the influence of liquid or other foreign matter on charging or discharging of the battery cells.

The battery cell includes a housing, an electrode assembly, and an electrolyte solution. The housing is configured to accommodate the electrode assembly and the electrolyte solution. One or a plurality of electrode assemblies are arranged in the housing. The electrode assembly is composed of a positive electrode plate, a negative electrode plate, and a separator. The electrode assembly may be of a winding structure or a laminating structure. The operation of the battery cell mainly relies on the movement of metal ions between the positive electrode plate and the negative electrode plate.

The positive electrode sheet usually may include a positive electrode current collector and a positive electrode active material layer. The positive electrode active material layer directly or indirectly coats the positive electrode current collector, the part of the positive electrode current collector not coated with the positive electrode active material layer protrudes from the part of the positive electrode current collector already coated with the positive electrode active material layer, and the part of the positive electrode current collector not coated with the positive electrode active material layer serves as a positive electrode tab. Taking a lithium-ion battery as an example, the positive electrode current collector may be made of aluminum, and the positive electrode active material layer may be made of lithium cobalt oxide, lithium iron phosphate, ternary lithium or lithium manganate or the like.

The negative electrode sheet usually may include a negative electrode current collector and a negative electrode active material layer. The negative electrode active material layer directly or indirectly coats the negative electrode current collector, the part of the negative electrode current collector not coated with the negative electrode active material layer protrudes from the part of the negative electrode current collector already coated with the negative electrode active material layer, and the part of the negative electrode current collector not coated with the negative electrode active material layer serves as a negative electrode tab. The negative electrode current collector may be made of copper, and the negative electrode active material layer may be made of carbon or silicon or the like.

In order to ensure that high currents can flow through without fusing, a plurality of positive electrode tabs are laminated to form a tab portion of a positive electrode, and a plurality of negative electrode tabs are laminated to form a tab portion of a negative electrode. A terminal is arranged on the housing, the tab portion of the positive electrode is electrically connected to the terminal of the positive electrode, and the tab portion of the negative electrode is electrically connected to the terminal of the negative electrode. The tab portion may be directly connected to the terminal, or may also be indirectly connected to the terminal through an adapter plate.

There is no limitation on the material of the separator, and the separator may be made of polypropylene, or polyethylene, or the like.

In related technologies, a battery has a brazed cold plate and an expansion beam inside a case. The expansion beam has a first space for mounting battery cells and a second space for mounting a battery management system and/or a high-voltage case on two sides respectively. A current collection path connected to the brazed cold plate needs to pass under the expansion beam to extend from the first space into the second space. In this way, the current collection path occupies the space in the second space, affecting the mounting of the battery management system and/or the high-voltage case, which is not conducive to battery manufacturing. If the second space is enlarged to facilitate the mounting of the battery management system and/or the high-voltage case, the space of the first space needs to be sacrificed, thereby reducing the first space's capacity to accommodate the battery cells and resulting in a lower volumetric energy density of the battery.

To this end, some embodiments of the present application provide a battery. By arranging a clearance space between an expansion beam and a case to accommodate at least a portion of a current collection path, the occupation of the current collection path to a second space can be reduced, thereby saving the space and facilitating the arrangement of a battery management system and/or a high-voltage case, thus improving the space utilization rate and facilitating battery manufacturing. Given the size optimization of the second space, the size of a first space can be relatively increased, thereby increasing the number of battery cells within the first space, and increasing the volumetric energy density of the battery.

An embodiment of the present application provides an electrical apparatus using a battery as a power source. The electrical apparatus may be, but is not limited to, a mobile phone, a tablet computer, a laptop, an electric toy, an electric tool, a battery vehicle, an electric vehicle, a ship, a spacecraft, etc. The electric toy may include a fixed or mobile electric toy, such as a game console, an electric car toy, an electric ship toy, an electric airplane toy, and the like. The spacecraft may include an airplane, a rocket, a space shuttle, a spaceship, and the like.

For convenience of description, the following embodiments are illustrated by taking an example in which an electrical apparatus according to an embodiment of the present application is a vehicle.

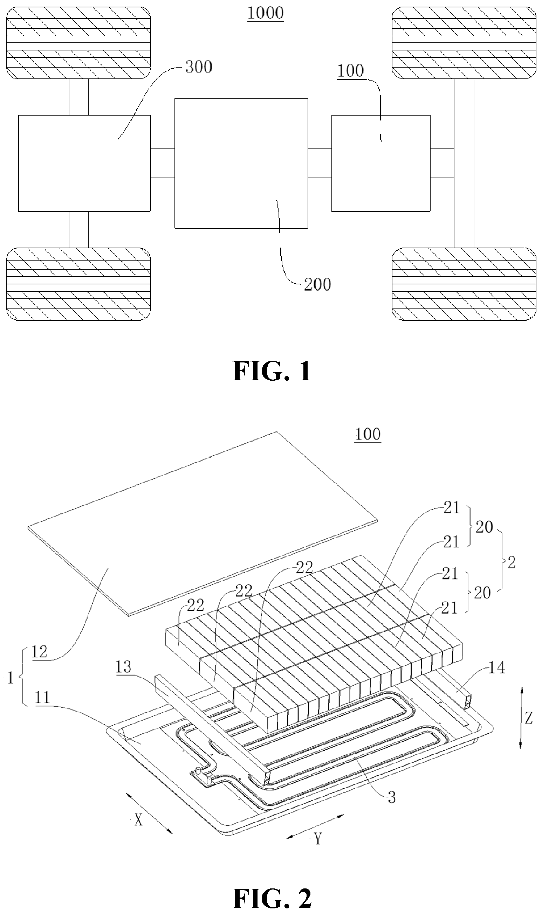

Referring to FIG. 1, FIG. 1 is a schematic structural view of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended range electric vehicle, or the like. A battery 100 is provided inside the vehicle 1000. The battery 100 may be provided at the bottom, or head, or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, and also may serve as a driving power source of the vehicle 1000, thus replacing or partially replacing fuel or natural gas to provide driving power for the vehicle 1000.

Referring to FIG. 2, FIG. 2 is an exploded view of a partial structure of a battery 100 provided by some embodiments of the present application. The battery 100 includes a case assembly 1 and a battery cell assembly 2, the case assembly 1 includes a case 11, and the battery cell assembly 2 is arranged in the case 11. The battery cell assembly 2 includes a plurality of battery cells 21, and the plurality of battery cells 21 may be connected in series or in parallel or in series-parallel connection. The series-parallel connection refers to that the plurality of battery cells 21 are connected in series and in parallel. The plurality of battery cells 21 may be directly connected in series or in parallel or in series-parallel connection, and then an entirety composed of the plurality of battery cells 21 may be accommodated in the case assembly 1. Of course, the plurality of battery cells 21 may also be connected in series or in parallel or in series-parallel connection to form a battery module, and then a plurality of battery modules are connected in series or in parallel or in series-parallel connection to form an entirety which is accommodated in the case assembly 1.

It is to be noted that, directional or positional relationships indicated by "top", "bottom", "upper", "lower" and the like described herein are based on the directional or positional relationships shown in the accompanying drawings, and are only for the convenience of describing the present application and simplifying the description, rather than indicating or implying that the device or element must have a specific orientation and be constructed and operated in a specific orientation, thus cannot be understood as a limitation of the present application. For example, in the embodiment shown in FIG. 2, the case assembly 1 includes the case 11 and a case cover 12, with the case cover 12 located at the top of the case 11. In actual use, the battery 100 may be placed upright with the case cover 12 located at the top of the case 11, or the battery 100 may also be placed upside down with the case cover 12 located at the bottom of the case 11.

In addition, the battery 100 may further include other structures. For example, the battery 100 may further include a busbar component for implementing electrical connection between the plurality of battery cells 21. Each battery cell 21 may be a secondary battery or a primary battery; or may be a lithium-sulfur battery, a sodium-ion battery or a magnesium-ion battery, but is not limited thereto. The battery cells 21 may be in a cylindrical, flat, rectangular solid shape, or the like.

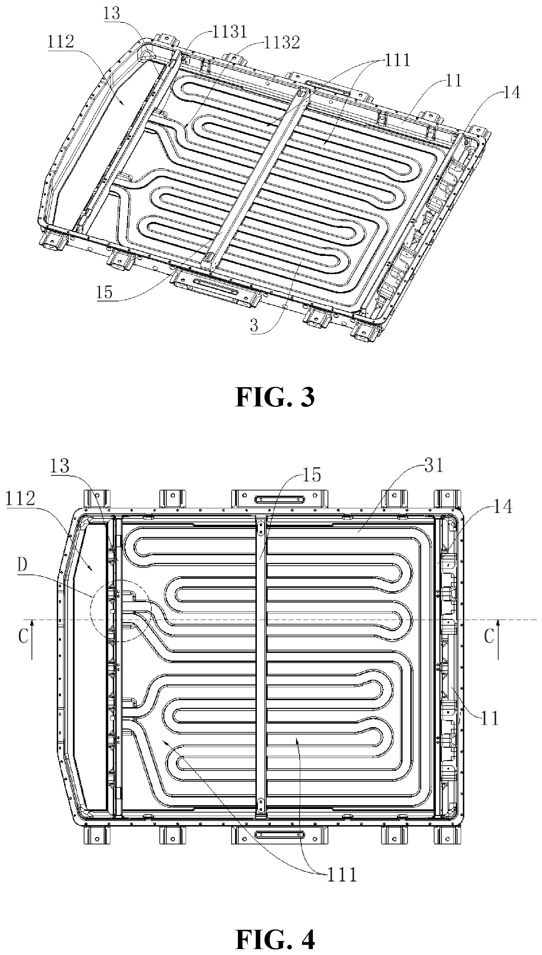

Referring to FIG. 2 and FIG. 3, the case assembly 1 further includes a first expansion beam 13 disposed inside the case 11. The space inside the case 11 is divided into a first space 111 and a second space 112 by the first expansion beam 13. The battery cell assembly 2 is located in the first space 111, and an end 22 of the battery cell assembly 2 abuts against the first expansion beam 13. In the phrase "the battery cell assembly 2 abuts against the first expansion beam 13", the word "abuts" can be interpreted broadly as either direct contact or indirect contact.

In the above technical solution, since the battery cell assembly 2 is located on the side of the first expansion beam 13 away from the second space 112, the second space 112 does not need to be equipped with the battery cell assembly 2. Thus, the second space 112 may be used as a mounting space for mounting a battery management system (BMS), a high-voltage case, etc.

It is worth noting that, in addition to the battery cell assembly 2, other components can also be arranged in the first space 111. For example, in some examples, with reference to FIG. 2, a second expansion beam 14 may also be arranged in the first space 111, and the battery cell assembly 2 is sandwiched between the first expansion beam 13 and the second expansion beam 14. For another example, in some other examples, with reference to FIG. 3 and FIG. 4, a second expansion beam 14 and a third expansion beam 15 may also be arranged in the first space 111. The third expansion beam 15 is located between the first expansion beam 13 and the second expansion beam 14. The third expansion beam 15 divides the first space 111 into two spaces, each of which is provided with a plurality of battery cells 21, so that a part of the battery cell assembly 2 is sandwiched between the first expansion beam 13 and the third expansion beam 15, and the rest of the battery cell assembly 2 is sandwiched between the third expansion beam 15 and the second expansion beam 14.

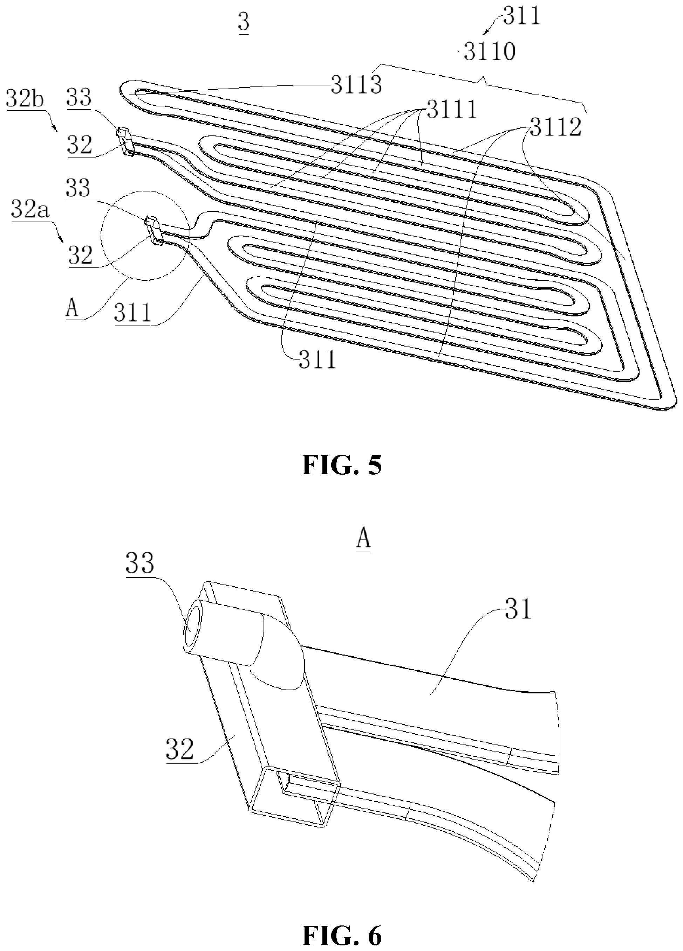

Referring to FIG. 2, FIG. 5 and FIG. 6, the battery 100 further includes a heat exchange assembly 3, and the heat exchange assembly 3 is disposed on the case assembly 1. The heat exchange assembly 3 includes a heat exchange member 31, a current collector 32 and an adapter 33. The heat exchange member 31 and the battery cell assembly 2 are arranged to allow heat exchange. The heat exchange member 31 is in communication with the current collector 32, and the adapter 33 is in communication with the current collector 32.

Exemplarily, fluid to be heat exchanged enters the current collector 32 through the adapter 33, and then is injected into the heat exchange member 31 through the current collector 32.The fluid to be heat exchanged flowing through the heat exchange member 31 exchanges heat with the battery cell assembly 2 through the heat exchange member 31 to achieve temperature regulation of the battery cell assembly 2. The fluid after heat exchange is discharged from the heat exchange member 31 and enters the current collector 32, and then flows out through the adapter 33. The fluid to be heat exchanged may be in a liquid form or a gas form, etc. For the sake of simplicity, the following description will take the fluid flowing through the heat exchange assembly 3 as the heat exchange liquid as an example.

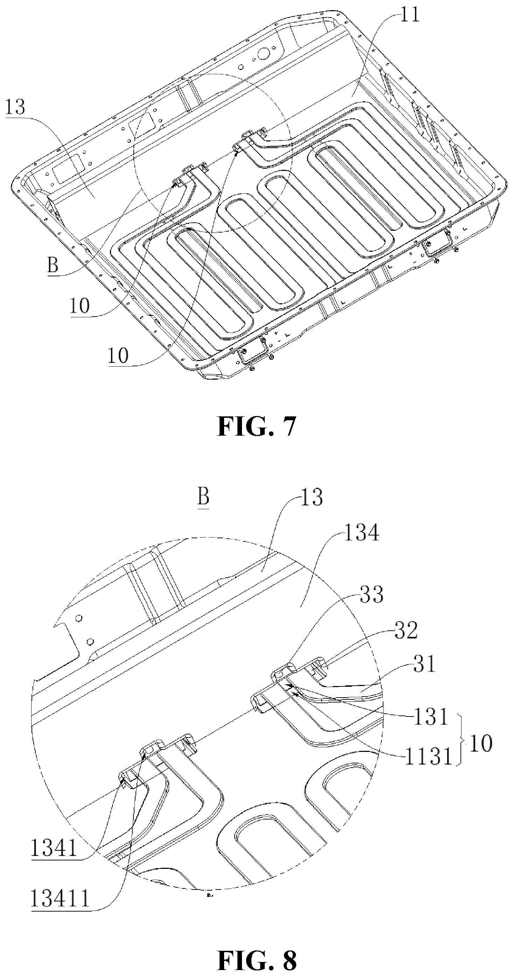

Referring to FIGS. 7-9, a clearance space 10 is formed between the first expansion beam 13 and the case 11 or on the first expansion beam 13. The current collector 32 and the adapter 33 are both arranged inside the case 11, and at least one of the current collector and the adapter is at least partially located in the clearance space 10. For example, at least a portion of the current collector 32 only may be located within the clearance space 10, or at least a portion of the adapter 33 only may be located within the clearance space 10, or at least a portion of the current collector 32 and at least a portion of the adapter 33 may be located within the clearance space 10.

The clearance space 10 may be defined solely by the first expansion beam 13, for example, the clearance space 10 may be in a perforated form. Alternatively, the clearance space 10 may also be defined by the case 11 and the first expansion beam 13 jointly, and the position thereof corresponds to the first expansion beam 13. For example, at least one of the case 11 and the first expansion beam 13 has a clearance portion (such as a groove structure or a notch structure), and the clearance space 10 is formed by the clearance portion. Exemplarily, when the clearance space 10 is defined by the case 11 and the first expansion beam 13 jointly, and the case 11 includes a bottom wall 113 and a surrounding wall 114, the clearance space 10 may be defined by the first expansion beam 13 and the bottom wall 113 of the case 11 jointly, or by the first expansion beam 13 and the surrounding wall 114 of the case 11 jointly, depending on the specific location of the current collector 32.

In the above technical solution, by forming the clearance space 10 between the first expansion beam 13 and the case 11, or on the first expansion beam 13, to accommodate at least a portion of at least one of the current collector 32 and the adapter 33, the occupation of the current collector 32 and/or the adapter 33 to the second space 112 can be reduced, thereby saving the space and facilitating the arrangement of the battery management system (BMS) and/or the high-voltage case in the second space 112, thus improving the space utilization rate. Besides, given the size optimization of the second space 112, the size of the first space 111 can be relatively increased, thereby increasing the number of the battery cells 21 within the first space 111, further increasing the volumetric energy density of the battery 100.

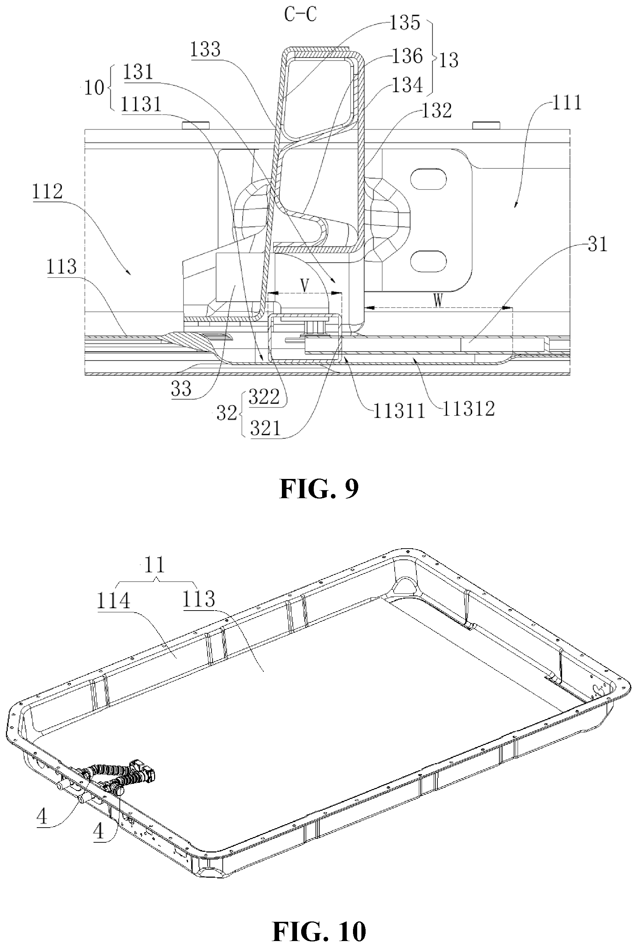

Referring to FIG. 9, in some embodiments of the present application, a side surface of the first expansion beam 13 facing the first space is a first surface 132, at least a portion of the current collector 32 is located in the clearance space 10, and a side surface of the current collector 32 (i.e., a surface I 321 of the current collector 32) near the first space 111 is flush with the first surface 132, or is disposed closer to the second space 112 relative to the first surface 132.

In the above technical solution, by arranging at least a portion of the current collector 32 in the clearance space 10 and not protruding from the first expansion beam 13 towards the direction of the first space 111, the arrangement of the current collector 32 will not interfere with the abutting between the battery cell assembly 2 and the first expansion beam 13, thereby simplifying the design. For example, neither the battery cell assembly 2 nor the first expansion beam 13 needs to be structurally adjusted to avoid a protruding part on the first expansion beam 13, nor does it need to provide other support structures between the battery cell assembly 2 and the first expansion beam 13 to achieve avoidance.

Referring to FIG. 9, in some embodiments of the present application, a side surface of the first expansion beam 13 facing the second space 112 is a second surface 133, at least a portion of the current collector 32 is located in the clearance space 10, and a side surface of the current collector 32 (i.e., a surface II 322 of the current collector 32) near the second space 112 is flush with the second surface 133, or is disposed closer to the first space 111 relative to the second surface 133.

In the above technical solution, by arranging at least a portion of the current collector 32 in the clearance space 10 and not protruding from the first expansion beam 13 towards the direction of the second space 112, the arrangement of the current collector 32 will not occupy the second space 112, thereby further increasing the space utilization rate.

Furthermore, in some embodiments of the present application, when the current collector 32 does not protrude from the first expansion beam 13 towards the direction of the first space 111, nor towards the direction of the second space 112, the current collector 32 can make fuller use of the space within the first expansion beam 13, thereby further increasing the space utilization rate.

However, the present application is not limited to this. For example, in other embodiments of the present application, the current collector 32 may also be arranged to protrude from the first expansion beam 13 towards the direction of the first space 111. In this case, a support pad may be provided between the first expansion beam 13 and the battery cell assembly 2. The support pad forms an avoidance gap at the position corresponding to the current collector 32 so that the first expansion beam 13 can abut against the battery cell assembly 2 through the support pad.

For example, in other embodiments of the present application, the current collector 32 may also be arranged to protrude from the first expansion beam 13 towards the direction of the second space 112. However, compared with completing arranging the current collector 32 in the second space 112, this method can also reduce the space occupation of the second space 112 by the current collector 32 and improve the space utilization rate to a certain extent.

Referring to FIG.9, in some embodiments of the present application, the current collector 32 is located in the clearance space 10, one end of the adapter 33 is located in the clearance space 10 and penetrates into the current collector 32 to be in communication with the current collector 32, and the other end of the adapter 33 extends into the second space 112.

In the above technical solution, by arranging the entire current collector 32 in the clearance space 10, the occupation of the current collector 32 to the second space 112 can be reduced, effectively increasing the space utilization rate. Furthermore, by placing one end of the adapter 33 in the clearance space 10 to penetrate through the current collector 32, not only can the occupation to the second space 112 be further reduced, but the communication between the current collector 32 and the adapter 33 can also be simplified, making assembly easier, saving parts, and improving the compactness of the fit between components. Exemplarily, by extending the other end of the adapter 33 into the second space 112, the adapter 33 can be connected to an adapter pipe 4 (as shown in FIG. 10) extending into the second space 112, so as to realize the introduction and discharge of heat exchange liquid.

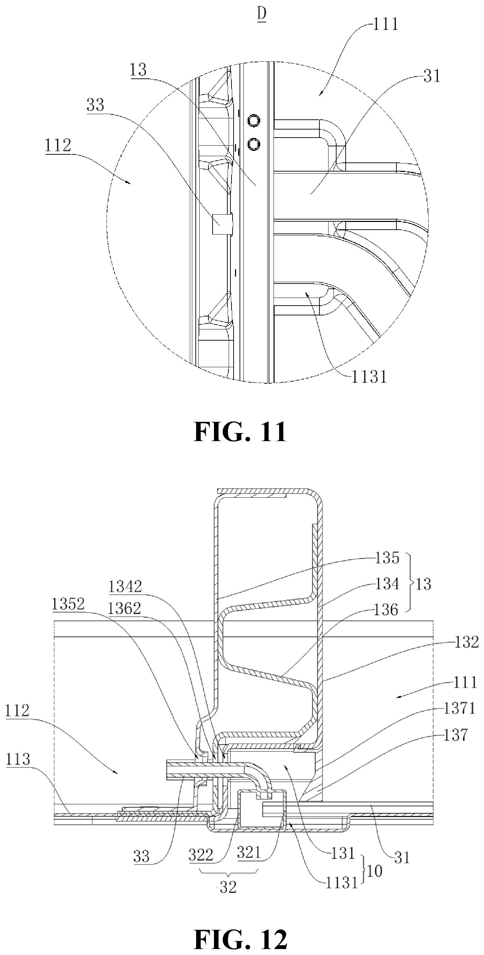

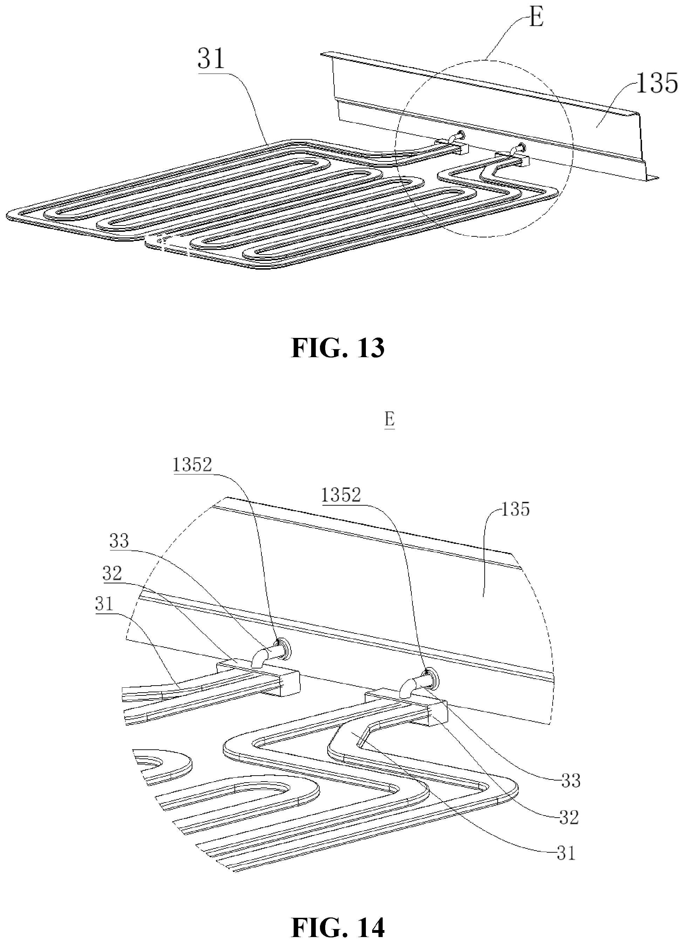

Referring to FIG. 11 to FIG. 14, in some embodiments of the present application, the adapter 33 penetrates through the first expansion beam 13 so that the other end of the adapter 33 extends into the second space 112. For example, a through hole may be provided on the first expansion beam 13 so that the other end of the adapter 33 penetrates out of the first expansion beam 13, that is, the other end of the adapter 33 penetrates out via the through hole.

Thus, by arranging the adapter 33 to penetrate through the first expansion beam 13, it is convenient for the adapter 33 to extend into the second space 112, thereby reducing the difficulty of operation, improving the assembly efficiency, and simplifying the design and processing difficulty of the case 11, without the need for special design and processing for penetration of the adapter 33. Of course, the present application is not limited to this. For example, in other embodiments of the present application, the other end of the adapter 33 may also extend into the second space 112 from the bottom of the first expansion beam 13.

The form of the through hole depends on the composition of the first expansion beam 13. For example, when the first expansion beam 13 is composed of a plurality of beam plates, a through hole may be processed on each beam plate. In this case, there may be multiple through holes, which are arranged correspondingly. For example, in some embodiments of the present application, referring to FIG. 12 to FIG. 16, the first expansion beam 13 includes an outer beam plate 135 and an inner beam plate 134 arranged sequentially in a direction from the second space 112 to the first space 111, and the first expansion beam 13 further includes a reinforcing plate 136 supported between the outer beam plate 135 and the inner beam plate 134. The inner beam plate 134 is provided with a first through hole 1342, the reinforcing plate 136 is provided with a second through hole 1362, and the outer beam plate 135 is provided with a third through hole 1352. The first through hole 1342, the second through hole 1362, and the third through hole 1352 correspond to each other and are used for penetration by the adapter 33. Thus, by arranging the first through hole 1342 on the inner beam plate 134, the second through hole 1362 on the reinforcing plate 136, and the third through hole 1352 on the outer beam plate 135, it is not necessary to reduce the height of any of the inner beam plate 134, the reinforcing plate 136, and the outer beam plate 135 to avoid the adapter 33. This allows the inner beam plate 134, the reinforcing plate 136, and the outer beam plate 135 to maintain their original heights and have a relatively large support range, thereby achieving the better supporting effect for the battery cell assembly 2.

Referring to FIG. 12, FIG. 15 and FIG. 16, in some embodiments of the present application, the clearance space 10 includes a first clearance portion 131 formed on the first expansion beam 13, and the first clearance portion 131 opens towards the direction of the first space 111. Thus, by providing the first clearance portion 131 that opens towards the direction of the first space 111 on the first expansion beam 13, it is convenient for the current collector 32 to extend from one side of the first space 111 towards the direction of the second space 112 into the first clearance portion 131, which helps to reduce the difficulty of installing the current collector 32 into the clearance space 10 and improve assembly efficiency.

Furthermore, in some embodiments, since the first expansion beam 13 is provided with a first clearance portion 131, at least a portion of the current collector 32 may be disposed in the first clearance portion 131, so as to utilize the space on the first expansion beam 13 to accommodate at least a portion of the current collector 32, thereby further increasing the space utilization rate.

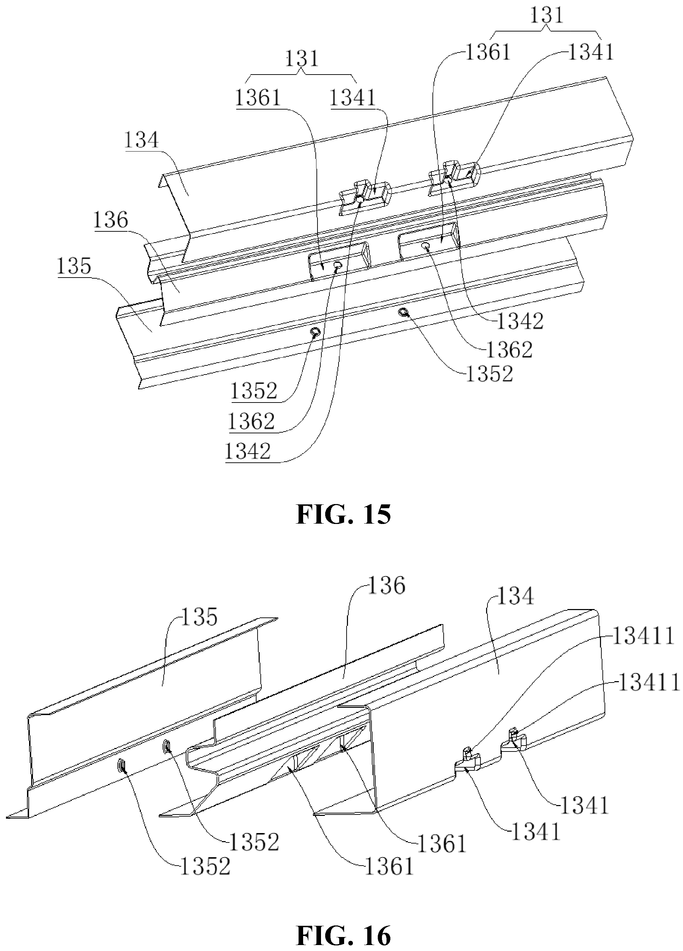

Referring to FIG. 15 and FIG. 16, exemplarily, the first clearance portion 131 is formed as a recessed structure that is recessed towards the direction of the second space 112. Thus, by arranging the first clearance portion 131 as the recessed structure, the structural strength of the first expansion beam 13 at the location where the first clearance portion 131 is arranged can be improved, which is beneficial to protecting the current collector 32 and/or the adapter 33 in the clearance space, and the first clearance portion 131 is convenient to process.

Referring to FIG. 15 and FIG. 16, in some embodiments of the present application, the first expansion beam 13 includes the outer beam plate 135 and the inner beam plate 134, the inner beam plate 134 is away from the second space 112 relative to the outer beam plate 135 and abuts against the battery cell assembly 2 (either direct or indirect contact), the first clearance portion 131 includes a first recessed portion 1341 formed on the inner beam plate 134, and the first recessed portion 1341 is recessed towards the direction of the second space 112. That is, when the first clearance portion 131 is formed as the recessed structure that is recessed towards the direction of the second space 112, the first clearance portion 131 may include the first recessed portion 1341 formed on the inner beam plate 134.

Thus, by arranging the first expansion beam 13 to include the outer beam plate 135 and the inner beam plate 134, the reliability of the first expansion beam 13 in supporting the battery cell assembly 2 can be improved, and the cost and weight of the first expansion beam 13 can be reduced. Moreover, by processing the first recessed portion 1341 on the inner beam plate 134 of the first expansion beam 13 on the side close to the battery cell assembly 2, the first recessed portion 1341 can be made to open towards the direction of the first space 111. Moreover, by processing the first recessed portion 1341 on a part of the inner beam plate 134 to avoid the current collector 32 and the adapter 33, it is not necessary to reduce the overall height of the inner beam plate 134 and move it upward in order to avoid the current collector 32 and the adapter 33. This allows the inner beam plate 134 to maintain its original height and have a relatively large support range, thus achieving the better abutting effect for the battery cell assembly 2.

Referring to FIG. 12, FIG. 15 and FIG. 16, in some embodiments of the present application, the first expansion beam 13 further includes the reinforcing plate 136 supported between the outer beam plate 135 and the inner beam plate 134, the first clearance portion 131 further includes a second recessed portion 1361 formed on the reinforcing plate 136, and the second recessed portion 1361 corresponds to the first recessed portion 1341 and is recessed towards the direction away from the first recessed portion 1341.

Thus, by arranging the reinforcing plate 136 between the outer beam plate 135 and the inner beam plate 134, the structural strength of the first expansion beam 13 can be improved, which is beneficial to improving the supporting effect for the battery cell assembly 2. Moreover, by processing the second recessed portion 1361 on a part of the reinforcing plate 136 to avoid the current collector 32 and the adapter 33, it is not necessary to reduce the overall height of the reinforcing plate 136 and move it upward in order to avoid the current collector 32 and the adapter 33. This allows the reinforcing plate 136 to maintain its original height and have a relatively large support range, thus achieving the better supporting effect for the battery cell assembly 2.

Referring to FIG. 12, FIG. 15 and FIG. 16, in some embodiments of the present application, the open area of the side of the first recessed portion 1341 facing the first space 111 is smaller than the open area of the side of the second recessed portion 1361 close to the first space 111. Thus, since the open area of the side of the first recessed portion 1341 facing the battery cell assembly 2 is relatively small, it is beneficial to enlarging the abutting range between the inner beam plate 134 and the battery cell assembly 2 and improving the reliability of the battery 100. The open area of the side of the second recessed portion 1361 facing the first recessed portion 1341 is relatively large, which is beneficial for the first recessed portion 1341 to extend into the second recessed portion 1361, reducing the assembly difficulty of the inner beam plate 134 and the reinforcing plate 136 and improving the assembly efficiency of the first expansion beam 13.

In some embodiments of the present application, referring to FIG. 12, the current collector 32 is located in the clearance space 10, the adapter 33 is in a bend form with one end located in the clearance space 10 and penetrating through a top wall of the current collector 32, while the other end penetrating through the first expansion beam 13 and extending into the second space 112. With reference to FIG. 8, FIG. 15 and FIG. 16, a top wall of the first recessed portion 1341 is provided with an upper concave portion 13411 which accommodates the adapter 33.

For example, the adapter 33 is in the bend form and includes a horizontal pipe section and a vertical pipe section. The horizontal pipe section extends from the upper end of the vertical pipe section towards the direction of the second space 112. The lower end of the vertical pipe section penetrates downward into the top wall of the current collector 32. The end of the horizontal pipe section away from the vertical pipe section passes horizontally through the first expansion beam 13 towards the direction of the second space 112, thereby pushing the current collector 32 in the direction from the first space 111 to the second space 112. The end of the adapter 33 may naturally pass through the first expansion beam 13, which facilitates assembly and improves assembly efficiency.

Thus, by arranging the adapter 33 in the bend form with one end located in the clearance space 10 and penetrating through the top wall of the current collector 32, while the other end penetrating through the first expansion beam 13 and extending into the second space 112, the assembly efficiency can be improved. Moreover, by arranging the upper concave portion 13411 on the top wall of the first recessed portion 1341 to avoid the adapter 33, the open area of the side of the first recessed portion 1341 facing the battery cell assembly 2 can be further reduced, which is beneficial to enlarging the abutting range between the inner beam plate 134 and the battery cell assembly 2 and improving the reliability of the battery 100.

Of course, the present application is not limited to this. For example, in some other embodiments of the present application, one end of the adapter 33 may also be arranged to penetrate through a side wall of the current collector 32 close to the second space 112, while the other end bypasses the bottom of the first expansion beam 13 and extends into the second space 112.

In some embodiments of the present application, referring to FIG. 12 to FIG. 16, the first expansion beam 13 includes the outer beam plate 135 and the inner beam plate 134 arranged sequentially in a direction from the second space 112 to the first space 111, and the first expansion beam 13 further includes the reinforcing plate 136 supported between the outer beam plate 135 and the inner beam plate 134. The inner beam plate 134 is provided with the first through hole 1342, the reinforcing plate 136 is provided with the second through hole 1362, and the outer beam plate 135 is provided with the third through hole 1352. The first through hole 1342, the second through hole 1362, and the third through hole 1352 correspond to each other and are used for penetration by the adapter 33.

Thus, by arranging the first through hole 1342 on the inner beam plate 134, the second through hole 1362 on the reinforcing plate 136, and the third through hole 1352 on the outer beam plate 135, it is not necessary to reduce the height of any of the inner beam plate 134, the reinforcing plate 136, and the outer beam plate 135 to avoid the adapter 33. This allows the inner beam plate 134, the reinforcing plate 136, and the outer beam plate 135 to maintain their original heights and have a relatively large support range, thereby achieving the better supporting effect for the battery cell assembly 2.

Of course, the present application is not limited to this. For example, in other embodiments of the present application, the first clearance portion 131 may also be configured as a notch structure that penetrates the first expansion beam 131. For example, the inner beam plate 134 and the reinforcing plate 136 have correspondingly arranged notches, while the outer beam plate 135 has a through hole.

In some embodiments of the present application, as shown in FIG. 12, the side surface of the first expansion beam 13 facing the first space 111 is the first surface 132, a filler 137 is provided at the first clearance portion 131, and an outer surface 1371 of the filler 137 is flush with the first surface 132. Thus, by arranging the filler 137 to fill the space in the open surface of the first clearance portion 131 that is not occupied by the heat exchange assembly 3, the filler 137 can be used to support the corresponding position of the battery cell assembly 2 at the missing position of the first expansion beam 13, thereby improving the overall supporting effect for the battery cell assembly 2 and improving the reliability of the battery 100. The installation method of the filler 137 is not limited. For example, it can be snapped with the first expansion beam 13 or the case 11.

In some embodiments of the present application, as shown in FIG. 12, a side of the first clearance portion 131 facing a bottom wall 113 of the case 11 is open. This facilitates the processing of the first clearance portion 131 and allows the current collector 32 and/or the adapter 33 to extend into the first clearance portion 131 conveniently, thereby improving assembly efficiency.

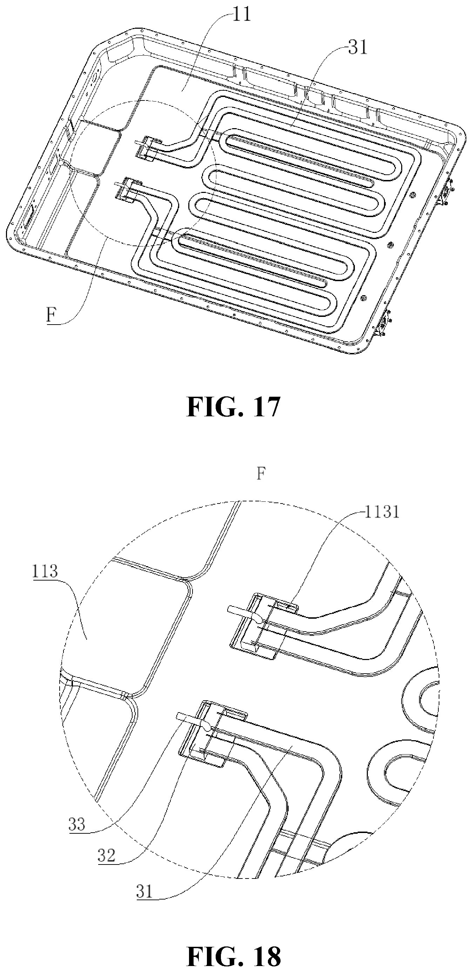

Exemplarily, as shown in FIG. 12, FIG. 17 and FIG. 18, when the side of the first clearance portion 131 facing the bottom wall 113 of the case 11 is open, the clearance space 10 may further include a second clearance portion 1131. The second clearance portion 1131 is formed by recessing of an upper surface of the bottom wall 113, that is, the second clearance portion 1131 is in a groove form. At least a portion of the second clearance portion 1131 is located below the first expansion beam 13, and at least a portion of the current collector 32 is embedded in the second clearance portion 1131.

Thus, the clearance space 10 includes the first clearance portion 131 formed on the first expansion beam 13 and the second clearance portion 1131 formed on the bottom wall 113 of the case 11 at the same time, which can increase the volume of the clearance space 10, making it more conducive to accommodating the current collector 32. Furthermore, since the second clearance portion 1131 is in the groove form, it helps to improve the airtightness of the case 11 and reduce the difficulty of sealing the case 11. Moreover, by providing the second clearance portion 1131 on the bottom wall 113 of the case 11 to accommodate at least a portion of the current collector 32, the size of the first clearance portion 131 can be relatively smaller, which helps to reduce the open area of the side of the first recessed portion 1341 facing the battery cell assembly 2, and helps to enlarge the abutting range between the inner beam plate 134 and the battery cell assembly 2, thereby improving the reliability of the battery 100.

Referring to FIG. 9, FIG. 17 and FIG. 18, in some embodiments, the second clearance portion 1131 includes a first groove segment 11311 located below the first expansion beam 13 and a second groove segment 11312 disposed away from the second space 112 relative to the first groove segment 11311, wherein a size W of the second groove segment 11312 is larger than a size V of the current collector 32 in a direction from the first groove segment 11311 to the second groove segment 11312 (i.e., in the direction from the second space 112 to the first space 111).

For example, during assembly, the current collector 32 may be first installed into the second groove segment 11312, and then the current collector 32 may be pushed in the direction from the first space 111 to the second space 112, so that the current collector 32 moves into the first groove segment 11311 and enters the clearance space 10. Thus, the installation of the current collector 32 can be achieved with just a simple action of horizontal pushing, thereby reducing the assembly difficulty and improving the assembly efficiency.

In the above technical solution, by arranging the size W of the second groove segment 11312 to be larger than the size V of the current collector 32, the second groove segment 11312 can pre-accommodate the current collector 32, so that the current collector 32 can be installed into the first groove segment 11311 with only a simple action of horizontal pushing, thereby reducing the assembly difficulty and improving the assembly efficiency.

Referring to FIG. 7 and FIG. 8, in some embodiments of the present application, when the first clearance portion 131 which opens towards the direction of the first space 111 is provided on the first expansion beam 13, the first expansion beam 13 may be constructed as a continuous beam which is continuous at the position corresponding to the clearance space 10. That is, the first expansion beam 13 is not a broken multi-segment beam, which can improve the structural reliability of the first expansion beam 13, facilitate the support of the battery cell assembly 2, and facilitate the processing and assembly of the first expansion beam 13.

In order to realize that the first expansion beam 13 is constructed as the continuous beam which is continuous at the position of the clearance space 10, there mat be many solutions. For example, the first expansion beam 13 may include a connecting part provided corresponding to the clearance space 10. The connecting part connects the portions on both sides of the first clearance portion 131. The connecting part and the portions on both sides of the first clearance portion 131 may be an integral part, or separate parts that are assembled and connected.

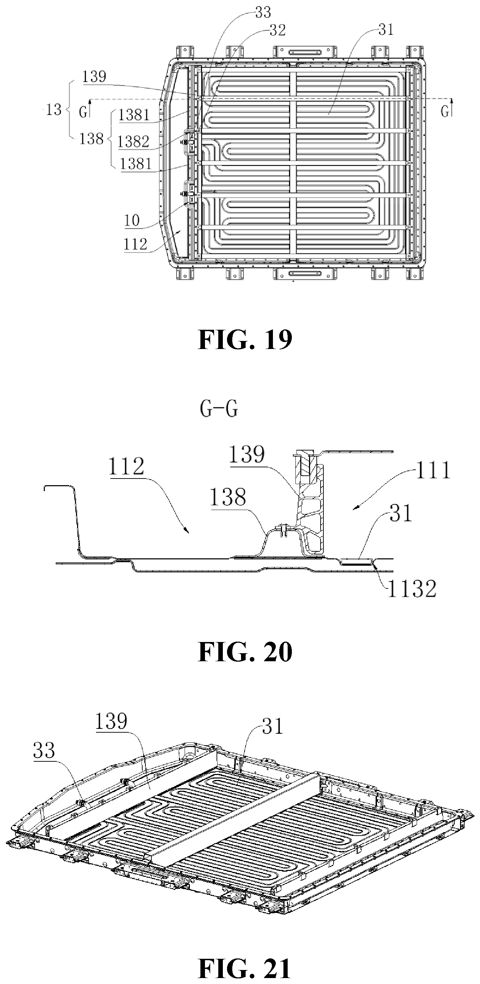

Of course, the first expansion beam 13 may not be provided with the first clearance portion 131 that opens towards the direction of the first space 111. For example, in other embodiments of the present application, referring to FIG. 19 to FIG. 21, the first expansion beam 13 includes a first beam 138, the first beam 138 includes a plurality of beam segments 1381 spaced apart in a length direction of the first expansion beam 13, and the clearance space 10 includes a gap 1382 arranged between every two adjacent beam segments 1381.

Thus, by arranging the first expansion beam 13 to include the plurality of beam segments 1381, and utilizing the gap 1382 between every two adjacent beam segments 1381 to avoid the current collector 32 and/or the adapter, it is beneficial to achieving flexible assembly of the heat exchange assembly 3. For example, the first beam 138 may be installed first and then the heat exchange assembly 3 may be installed, or the heat exchange assembly 3 may be installed first and then the first beam 138 may be installed. Moreover, the installation direction of the heat exchange assembly 3 that is installed later can be flexible. For example, it may be pushed horizontally along the direction from the first space 111 to the second space 112, or it may be placed from top to bottom, etc.

In some embodiments of the present application, referring to FIG. 19 to FIG. 21, the first expansion beam 13 further includes a second beam 139, and the second beam 139 is disposed away from the second space 112 relative to the first beam 138, blocks the gaps 1382 and abuts against the battery cell assembly 2. Thus, by arranging the first expansion beam 13 as a combination of the first beam 138 and the second beam 139, while the first beam 138 is used to meet the requirement of avoiding the current collector 32 and/or the adapter 33, the first beam 138 may further be used to support the second beam 139, and the second beam 139 is used to support the battery cell assembly 2. This is beneficial to improving the supporting effect of the first expansion beam 13 for the battery cell assembly 2 and improving the reliability of the battery 100.

Exemplarily, the second beam 139 may be an extruded hollow beam. Thus, the second beam 139 is easy to process and has good reliability, which helps to improve the supporting effect of the first expansion beam 13 for the battery cell assembly 2 and improve the reliability of the battery 100.

Exemplarily, as shown in FIG. 12, FIG. 17 and FIG. 18, when the first expansion beam 13 includes the first beam 138, the first beam 138 includes the plurality of beam segments 1381 spaced apart in the length direction of the first expansion beam 13, and the clearance space 10 includes the gap 1382 disposed between every two adjacent beam segments 1381, the clearance space 10 may further include the second clearance portion 1131. The second clearance portion 1131 is formed by recessing of the upper surface of the bottom wall 113, that is, the second clearance portion 1131 is in the groove form. At least a portion of the second clearance portion 1131 is located below the first expansion beam 13, and at least a portion of the current collector 32 is embedded in the second clearance portion 1131.

Thus, the clearance space 10 includes the gaps 1382 formed on the first expansion beam 13 and the second clearance portion 1131 formed on the bottom wall 113 of the case 11 at the same time, which can increase the volume of the clearance space 10, making it more conducive to accommodating the current collector 32. Furthermore, since the second clearance portion 1131 is in the groove form, it helps to improve the airtightness of the case 11 and reduce the difficulty of sealing the case 11.

Referring to FIG. 9, FIG. 17 and FIG. 18, in some embodiments, the second clearance portion 1131 includes the first groove segment 11311 located below the first expansion beam 13 and the second groove segment 11312 disposed away from the second space 112 relative to the first groove segment 11311, wherein the size W of the second groove segment 11312 is larger than the size V of the current collector 32 in the direction from the first groove segment 11311 to the second groove segment 11312 (i.e., in the direction from the second space 112 to the first space 111).

For example, during assembly, the current collector 32 may be first installed into the second groove segment 11312, and then the current collector 32 may be pushed in the direction from the first space 111 to the second space 112, so that the current collector 32 moves into the first groove segment 11311 and enters the clearance space 10. Thus, the installation of the current collector 32 can be achieved with just a simple action of horizontal pushing, thereby reducing the assembly difficulty and improving the assembly efficiency.

In the above technical solution, by arranging the size W of the second groove segment 11312 to be larger than the size V of the current collector 32, the second groove segment 11312 can pre-accommodate the current collector 32, so that the current collector 32 can be installed into the first groove segment 11311 with only a simple action of horizontal pushing, thereby reducing the assembly difficulty and improving the assembly efficiency.

In addition, in some embodiments of the present application, when the clearance space 10 does not include the first clearance portion 131 or the gaps 1382 formed on the first expansion beam 13, if the clearance space 10 includes the second clearance portion 1131, the second clearance portion 1131 is formed by recessing of the upper surface of the bottom wall 113, that is, the second clearance portion 1131 is in the groove form. At least a portion of the second clearance portion 1131 is located below the first expansion beam 13, and at least a portion of the current collector 32 is embedded in the second clearance portion 1131. Thus, the processing of the first expansion beam 13 can be simplified. Since the second clearance portion 1131 is in the groove form, it is beneficial to improving the airtightness of the case 11 and reducing the sealing difficulty of the case 11.

Of course, the present application is not limited to this. For example, in some other embodiments of the present application, the clearance space 10 may further include a third clearance portion, which is disposed at the end of the first expansion beam 13 and/or is formed by recessing of a portion corresponding to the end of the first expansion beam 13 of the surrounding wall 114 of the case 11 towards the direction away from the first expansion beam 13. "The end of the first expansion beam 13" refers to the end of at least one of the two ends in the length direction of the first expansion beam 13.

In some embodiments of the present application, as shown in FIG. 2, FIG. 3, FIG. 5 and FIG. 22, the heat exchange member 31 is located inside the case 11 and between the bottom wall 113 of the case 11 and the battery cell assembly 2. In the above technical solution, by placing the heat exchange member 31 inside the case 11, compared to placing the heat exchange member 31 outside the case 11, the heat exchange member 31 can more fully exchange heat with the battery cell assembly 2, thereby improving the temperature regulation efficiency for the battery cell assembly 2 and reducing the waste of heat or cold. Furthermore, placing the heat exchange member 31 inside the case 11 facilitates the connection between the heat exchange member 31 and the current collector 32 inside the case 11 compared to placing the heat exchange member 31 outside the case 11, thereby reducing the sealing difficulty of the case 11 and improving the airtightness of the battery 100.

In some embodiments of the present application, as shown in FIG. 9, when the heat exchange member 31 is located inside the case 11 and between the bottom wall 113 of the case 11 and the battery cell assembly 2, a bottom surface of the current collector 32 is lower than a bottom surface of the heat exchange member 31, and the end of the heat exchange member 31 near the second space 112 penetrates through a side wall of the current collector 32 facing the first space 111.

Thus, it facilitates the connection between the current collector 32 and the heat exchange member 31, thereby improving assembly efficiency. Furthermore, if the upper surface of the bottom wall 113 of the case 11 has the recessed second clearance portion 1131 at the moment, at least a portion of the current collector 32 may be arranged within the second clearance portion 1131, which helps to reduce the lifting height of the current collector 32 relative to the bottom wall 113, reduce the distance between the heat exchange member 31 and the bottom wall 113, and reduce occupation of the first space 111 by the heat exchange member 31. Furthermore, when the second clearance portion 1131 includes the first groove segment 11311 located below the first expansion beam 13 and the second groove segment 11312 disposed away from the second space 112 relative to the first groove segment 11311, and the size W of the second groove segment 11312 is larger than the size V of the current collector 32 in the direction from the first groove segment 11311 to the second groove segment 11312, the heat exchange member 31 and current collector 32 assembled together may be installed in place by being pushed horizontally in the direction from the first space 111 to the second space 112 during assembly, without the need for other turning or lifting operations, thereby reducing assembly difficulty and improving assembly efficiency.

In some embodiments of the present application, as shown in FIG. 3, the upper surface of the bottom wall 113 has a recessed sink 1132, and the heat exchange member 31 is in embedded fit with the sink 1132. This reduces the space occupied by the heat exchange member 31 in the case 11, which is beneficial to increasing the capacity of the battery 100. This also helps improve the stability of the fit between the heat exchange member 31 and the case 11, thereby improving the reliability of the heat exchange member 31 in regulating the temperature of the battery cell assembly 2.

Exemplarily, when the upper surface of the bottom wall 113 has the recessed second clearance portion 1131 and the recessed sink 1132, the groove depth of the second clearance portion 1131 may be greater than the sink depth of the sink 1132, thereby matching the design that the bottom surface of the current collector 32 is lower than the bottom surface of the heat exchange member 31, which is beneficial to reducing the distance between the heat exchange member 31 and the bottom wall 113.

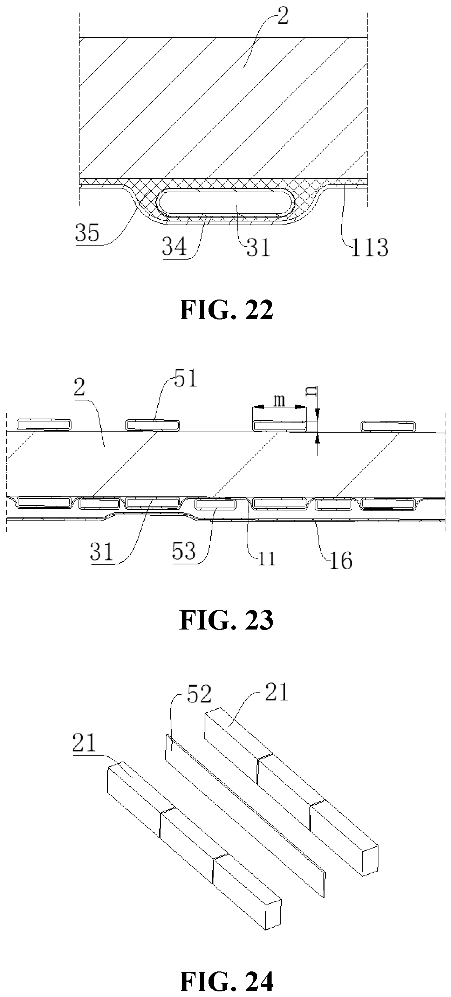

In some embodiments of the present application, as shown in FIG. 3 and FIG. 22, an insulating layer 34 is provided on each of the upper surface of the bottom wall 113 and an outer surface of the heat exchange member 31, and insulating adhesives 35 fill the space between the bottom wall 113 and the battery cell assembly 2. Thus, the insulation between the heat exchange member 31 and the battery cell assembly 2 can be improved, thereby improving the reliability of the battery 100. Moreover, by arranging the insulating adhesives 35, the stable connection of the battery cell assembly 2, the heat exchange member 31, and the case 11 can be achieved, thereby improving the stability and reliability of heat exchange between the heat exchange member 31 and the battery cell assembly 2.

In some embodiments of the present application, as shown in FIG. 23 and FIG. 24, the battery 100 further includes: at least one of a first temperature regulating element 51, a second temperature regulating element 52, and a third temperature regulating element 53, wherein the first temperature regulating element 51 is disposed inside the case assembly 1 and at the top of the battery cell assembly 2, the second temperature regulating element 52 is disposed between large surfaces of adjacent battery cells 21 in the battery cell assembly 2, and the third temperature regulating element 53 is disposed outside the case 11 and below the bottom wall 113 of the case 11.

In the above technical solution, the battery 100 may include only one of the first temperature regulating element 51, the second temperature regulating element 52 and the third temperature regulating element 53, or it may include two of the first temperature regulating element 51, the second temperature regulating element 52 and the third temperature regulating element 53, or it may include all three of the first temperature regulating element 51, the second temperature regulating element 52 and the third temperature regulating element 53. Thus, the temperature regulating elements can be arranged at suitable locations according to the actual situation to meet the temperature regulation requirements of the battery 100.

Furthermore, a thermal management system of the battery 100 is not limited to including only the temperature regulating elements described above. For example, in some embodiments, at least one of the first expansion beam 13, the second expansion beam 14, and the third expansion beam 15 may be internally provided with heat exchange channels for temperature regulation, thereby constituting part of the thermal management system.

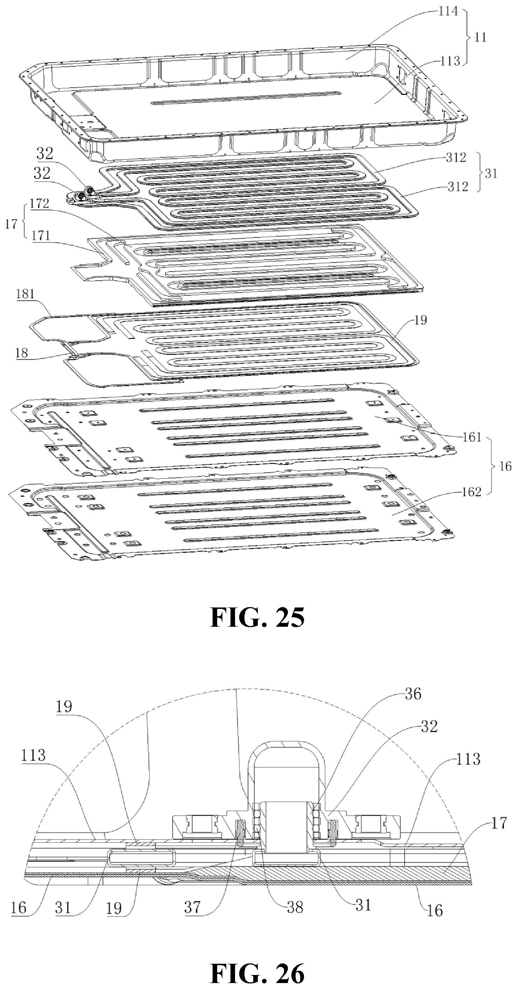

In some embodiments of the present application, as shown in FIG. 25, the case assembly 1 includes a bottom protective plate 16 located under the case 11, and the heat exchange member 31 is located outside the case 11 and between the bottom wall 113 of the case 11 and the bottom protective plate 16. Thus, by placing the heat exchange member 31 outside the case 11, there is no need to consider the insulation problem between the heat exchange member 31 and the battery cells 11 inside the case 11, thereby simplifying the insulation design of the heat exchange member 31, reducing the processing difficulty and production cost, solving the short circuit problem between the battery cells 21 and the heat exchange member 31, and improving the reliability of the battery 100. Moreover, by placing the heat exchange member 31 outside the case 11, the heat exchange member 31 will not occupy the space inside the case 11, so that the capacity of the battery 100 will not be reduced due to the installation of the heat exchange member 31, thus better ensuring the capacity of the battery 100. Furthermore, by placing the heat exchange member 31 under the bottom wall 113 of the case 11, the heat exchange member 31 can exchange heat with the battery cell assembly 2 within a larger range, improving the temperature regulation effect and efficiency of the battery cell assembly 2. In addition, by arranging the bottom protective plate 16 under the heat exchange member 31, the heat exchange member 31 can be reliably protected, reducing the risk of damage to the heat exchange member 31 from impacts and bumps, and improving the working reliability of the heat exchange member 31.

In some embodiments of the present application, as shown in FIG. 25 and FIG. 26, the heat exchange member 31 is connected to the current collector 32 via a connecting pipe 36 that penetrates through the bottom wall 113. Thus, by arranging the current collector 32 inside the case 11 and placing the heat exchange member 31 outside the case 11, and by arranging the connecting pipe 36 that penetrates through the case 11 to enable the current collector 32 and the heat exchange member 31 to communicate, the communication between the current collector 32 and the heat exchange member 31 is facilitated, and the installation of the current collector 32 and the heat exchange member 31 is also facilitated. Furthermore, it can shorten the channels and reduce the flow resistance of the heat exchange liquid. Furthermore, by arranging the current collector 32 inside the case 11, there is no need to set up an external liquid inlet/outlet path that communicates with the heat exchange member 31 outside the case 11. This eliminates the need to increase the sealing difficulty in order to meet the extension requirements of the external liquid inlet/outlet path, thereby reducing the sealing difficulty of the battery 100, simplifying the structure and reducing the cost of the battery 100, and improving the sealing reliability. Moreover, the built-in current collector 32 is not prone to being damaged by bumps, which reduces the risk of leakage and improves the working stability and reliability of the heat exchange assembly 3, thereby enhancing the reliability of the battery 100 during transportation and in-vehicle use. Of course, the present application is not limited to this. For example, in other embodiments of the present application, the heat exchange member 31 may also be configured to partially penetrate the bottom wall 113 to be directly connected to the current collector 32 inside the case 11.

In some embodiments of the present application, as shown in FIG. 26, the connecting pipe 36 is sleeved inside the current collector 32, a first seal 37 is arranged between the current collector 32 and the case 11 in sealing fit, and the first seal 37 is arranged around a mating surface of the current collector 32 and the connecting pipe 36. In the above technical solution, by arranging the first seal 37 between the current collector 32 and the case 11, and arranging the first seal 37 to surround the mating surface of the current collector 32 and the connecting pipe 36, that is, the entire circumferential area where the connecting pipe 36 and the current collector 32 are connected can be sealed by the first seal 37, the risk that heat exchange fluid overflowing from the mating point of the connecting pipe 36 overflows from the mating point of the current collector 32 and the case 11 into the case 11 can be reduced, thereby improving the reliability of the battery 100. Moreover, the clear arranging location of the first seal 37 makes the assembly of the first seal 37 easy, thereby reducing assembly and design difficulties.

In some embodiments of the present application, as shown in FIG. 26, a second seal 38 is further at a mating position of the current collector 32 and the connecting pipe 36, and the second seal 38 is arranged around the connecting pipe 36. In the above technical solution, by arranging the second seal 38 between the current collector 32 and the connecting pipe 36, the risk of heat exchange fluid overflowing from the mating point of the current collector 32 and the connecting pipe 36 can be reduced, thereby improving the reliability of the battery 100. Moreover, the clear arranging location of the second seal 38 makes the assembly of the second seal 38 easy, thereby reducing assembly and design difficulties.

In some embodiments of the present application, as shown in FIG. 25 and FIG. 26, the case assembly 1 further includes: a seal 18, the seal 18 is located between the bottom wall 113 and the bottom protective plate 16 in sealing fit and includes an outer periphery 181 arranged surrounding the heat exchange member 31, and the connecting pipe 36, corresponding to an in-ring region of the outer periphery 181, penetrates through the bottom wall 113.

Thus, by arranging the position of the connecting pipe 36 penetrating through the bottom wall 113 in the region surrounded by the outer periphery 181, when the outer periphery 181 is arranged between the bottom wall 113 and the bottom protective plate 16 in sealing fit, muddy water, particles and other substances outside the case assembly 1 are not prone to penetrating through the outer periphery 181 into the space between the bottom wall 113 and the bottom protective plate 16, and entering the case 11 by flowing to the position where the connecting pipe 36 penetrates through the bottom wall 113, thereby improving the reliability of the battery 100. Furthermore, because the heat exchange member 31 is surrounded by the outer periphery 181, muddy water, particles, and other substances outside the case assembly 1 are less likely to penetrate through the outer periphery 181 and enter the space between the bottom wall 113 and the bottom protective plate 16 to contaminate or corrode the heat exchange member 31 between the bottom wall 113 and the bottom protective plate 16, thereby improving the reliability and extending the service life of the heat exchange member 31.

In some embodiments of the present application, as shown in FIG. 25 and FIG. 26, a base adhesive layer 19 is provided between the heat exchange member 31 and the bottom wall 113, and a base adhesive layer 19 is provided between the heat exchange member 31 and the bottom protective plate 16. That is, the side surface of the heat exchange member 31 facing the bottom wall 113 is fixedly connected to the bottom wall 113 through the base adhesive layer 19, and the side surface of the heat exchange member 31 facing the bottom protective plate 16 is also fixedly connected to the bottom protective plate 16 through the base adhesive layer 19. Thus, on the one hand, the stability of heat transfer between the heat exchange member 31 and the bottom wall 113 can be improved, and on the other hand, the protective properties of the two side surfaces of the heat exchange member 31 can be improved, thus protecting the heat exchange member 31. It is worth noting that the order in which the base adhesive layer 19 is arranged is not limited. For example, it may be applied to both sides of the heat exchange member 31, or to the side of the bottom wall 113 facing the heat exchange member 31, or to the side of the bottom protective plate 16 facing the heat exchange member 31, etc. Exemplarily, the base adhesive layer 19 may be a structural adhesive, a high thermal conductivity double-sided adhesive, etc.

In some embodiments of the present application, as shown in FIG. 25 and FIG. 26, the heat exchange member 31 includes at least one heat exchange tube 312 which extends in a bent mode. The case assembly 1 further includes: a foaming element 17. The foaming element 17 is disposed between the bottom wall 113 and the bottom protective plate 16, and includes a first foaming portion 171 disposed around the heat exchange member 31, and a second foaming portion 172 disposed between adjacent tube segments of the same heat exchange tube 312 or between adjacent heat exchange tubes 312.

Thus, the foaming element 17 can be used to fill the space between the bottom wall 113 and the bottom protective plate 16 where the heat exchange member 31 is removed, that is, it is complementary to the heat exchange member 31. Thus, the foaming element 17 can support the bottom wall 113 and the bottom protective plate 16. When the protective plate 13 is impacted, the foaming element 17 can buffer the impact force and reduce the force of the bottom protective plate 16 impacting the heat exchange member 31 or the case 11, thereby protecting the heat exchange member 31 and the battery cell assembly 2 inside the case 11. Moreover, the foaming element 17 can also fill gaps between the heat exchange tubes 312, which can support and limit the positions of the heat exchange tubes 312, so that the heat exchange tubes 312 can be stably positioned to achieve stable temperature regulation.

In some embodiments of the present application, as shown in FIG. 25 and FIG. 26, the foaming element 17 is connected to the bottom protective plate 16, and an upper surface of the heat exchange member 31 is higher than an upper surface of the foaming element 17. That is, a side surface of the heat exchange member 31 facing the bottom wall 113 is positioned closer to the bottom wall 113 than a side surface of the foaming element 17 facing the bottom wall 113. Thus, this may reduce the molding difficulty of the foaming element 17 and help control the thickness uniformity of the foaming element 17. The arrangement of the foaming element 17 will not interfere with the heat transfer fit between the heat exchange member 31 and the bottom wall 113, thereby improving the stability and reliability of heat transfer between the heat exchange member 31 and the bottom wall 113. This is beneficial to improving the temperature regulation effect of the battery cell assembly 2 and thus improving the working reliability of the battery 100.

Furthermore, when the base adhesive layer 19 is provided between the heat exchange member 31 and the bottom wall 113, arranging the foaming element 17 to be connected to the bottom protective plate 16 helps to reduce the difficulty of providing the base adhesive layer 19 between the heat exchange member 31 and the bottom wall 113, and helps to improve the uniformity of the base adhesive layer 19 provided between the heat exchange member 31 and the bottom wall 113, thereby improving the stability and reliability of heat transfer between the heat exchange member 31 and the bottom wall 113, which helps to improve the temperature regulation effect of the battery cell assembly 2, and thus improves the working reliability of the battery 100.

For example, the foaming element 17 can be processed on the bottom protective plate 16 by a foaming process using a mold, thereby ensuring the uniformity of the thickness of the foaming element 17. Then, adhesives are applied to the heat exchange member 31 or the bottom wall 113. Next, the heat exchange member 31 is installed between the protective plate 13 with the foaming element 17 and the bottom wall 113. When the heat exchange member 31 protrudes relative to the foaming element 17 towards the direction of the bottom wall 113, the stability and reliability of the heat transfer fit between the heat exchange member 31 and the bottom wall 113 can be ensured.

In some other embodiments of the present application, the bottom protective plate 16, the case 11 and the heat exchange assembly 31 can be assembled in place first, and then foaming liquid can be injected between the bottom protective plate 16 and the bottom wall 113 of the case 11 for foaming. At this time, the injection position of the foaming liquid needs to be considered to ensure that the foaming height is uniform in all places and to avoid affecting the connection between the heat exchange assembly 31 and the case 11. Alternatively, in some other embodiments of the present application, the foaming element 17 can be processed on the bottom wall 113 of the case 11 by a foaming process using a mold, and then the heat exchange member 31 and the protective plate 13 can be assembled.

It is worth noting that the composition and material of the bottom protective plate 16 are not limited. Exemplarily, the bottom protective plate 16 may be a single-layer plate, such as a metal plate with an anti-corrosion layer on the outer surface. Alternatively, the bottom protective plate 16 may also be composed of multiple layers of plates. Exemplarily, with reference to FIG. 25, the bottom protective plate 16 includes a first protective plate 161 and a second protective plate 162. The second protective plate 162 is located below the first protective plate 161. The first protective plate 161 may be made of metal, and the second protective plate 162 may be made of corrosion-resistant materials, such as PVC (polyvinyl chloride).

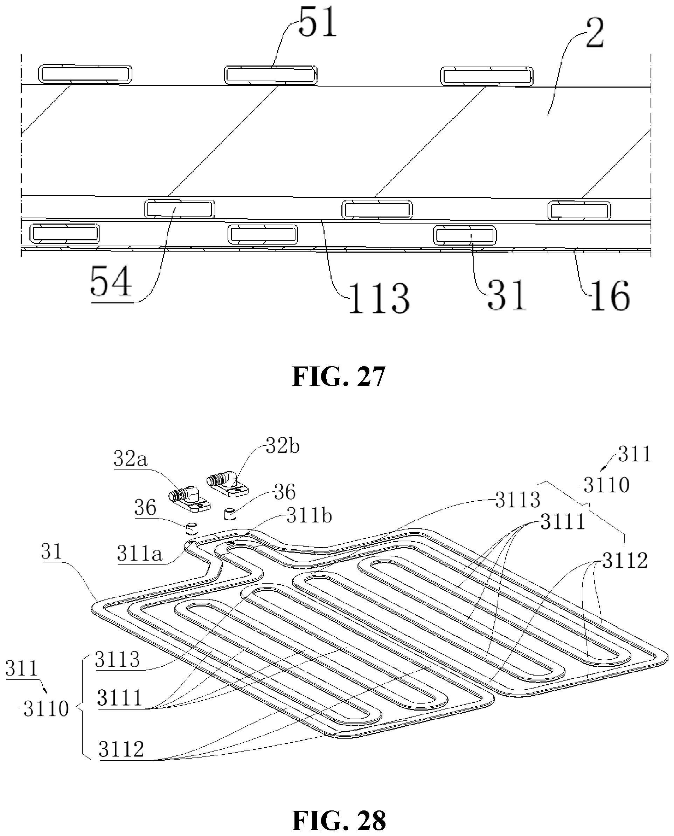

In some embodiments of the present application, as shown in FIG. 24 and FIG. 27, the battery 100 further includes: at least one of a first temperature regulating element 51, a second temperature regulating element 52, and a fourth temperature regulating element 54, wherein the first temperature regulating element 51 is disposed inside the case assembly 1 and at the top of the battery cell assembly 2, the second temperature regulating element 52 is disposed between large surfaces of adjacent battery cells 21 in the battery cell assembly 2, and the fourth temperature regulating element 54 is disposed inside the case 11 and located between the bottom wall 113 and the battery cell assembly 2.

That is, the battery 100 may include only one of the first temperature regulating element 51, the second temperature regulating element 52 and the fourth temperature regulating element 54, or it may include two of the first temperature regulating element 51, the second temperature regulating element 52 and the fourth temperature regulating element 54, or it may include all three of the first temperature regulating element 51, the second temperature regulating element 52 and the fourth temperature regulating element 54. Thus, the temperature regulating elements 5 can be arranged at suitable locations according to the actual situation to meet the temperature regulation requirements of the battery 100.

Furthermore, a thermal management system of the battery 100 is not limited to including only the temperature regulating elements described above. For example, in some embodiments, at least one of the first expansion beam 13, the second expansion beam 14, and the third expansion beam 15 may be internally provided with heat exchange channels for temperature regulation, thereby constituting part of the thermal management system.

In some embodiments of the present application, as shown in FIG. 2 and FIG. 25, the case 11 is an integrally stamped part and includes the bottom wall 113 and the surrounding wall 114. The heat exchange member 31 is laid on the bottom wall 113, for example, on the upper surface of the bottom wall 113 (e.g., the embodiment shown in FIG. 2), or on the lower surface of the bottom wall 113 (e.g., the embodiment shown in FIG. 25). This can increase the heat exchange area between the heat exchange member 31 and the battery cell assembly 2, thereby improving the temperature regulation effect for the battery cell assembly 2.

For example, the case 11 may be made of sheet metal and stamped into a basin shape, including the bottom wall 113 and the surrounding wall 114. Thus, since the bottom wall 113 and the surrounding wall 114 of the case 11 are integrally stamped, there is no need to consider sealing issues at the connection between the bottom wall 113 and the surrounding wall 114, which can ensure a sealing effect. This can prevent muddy water from seeping into the case 11 from the connection between the bottom wall 113 and the surrounding wall 114 and affecting the battery cell assembly 2 inside the case 11, thereby improving the reliability of the battery 100. Moreover, the integrally stamped case 11 eliminates the need for splicing, which can improve production efficiency.

In some embodiments of the present application, as shown in FIG. 28, the heat exchange member 31 includes a plurality of heat exchange channels 311 arranged in parallel. Since the heat exchange member 31 includes the plurality of heat exchange channels 311 arranged in parallel, when the total length of the channels required by the heat exchange member 31 is fixed, the length of each heat exchange channel 311 can be relatively short, which is conducive to improving the overall heat exchange efficiency of the heat exchange member 31 and improving the temperature regulation effect of the heat exchange member 31 for the battery cell assembly 2.

In some embodiments of the present application, as shown in FIG. 28, two current collectors 32 are provided, namely a first current collector 32a and a second current collector 32b, a first end 311a of each heat exchange channel 311 converges to and communicates with the first current collector 32a, and a second end 311b of each heat exchange channel 311 converges to and communicates with the second current collector 32b.

In this way, the first current collector 32a and the second current collector 32b are disposed, the first end 311a of each heat exchange channel 311 converges to and communicates with the first current collector 32a, and the second end 311b of each heat exchange channel 311 converges to and communicates with the second current collector 32b. In this way, one of the first current collector 32a and the second current collector 32b can be used as a liquid inlet current collector 32 and the other can be used as a liquid outlet current collector 32. There is no need to arrange two channels with opposite flow directions in each current collector 32, so the structure of the current collector 32 can be simplified and the reliability can be improved. Moreover, by correspondingly converging the two ends of each of the plurality of heat exchange channels 311 to the two current collectors 32 respectively, the number of the current collectors 32 can be reduced, thereby lowering material costs.

It is worth noting that which of the first current collector 32a and the second current collector 32b is the liquid inlet and which is the liquid outlet can be specifically set according to actual requirements, or the first current collector 32a and the second current collector 32b can be arranged to be switchable, that is, whether each current collector 32 is the liquid inlet or the liquid outlet is different in different modes.

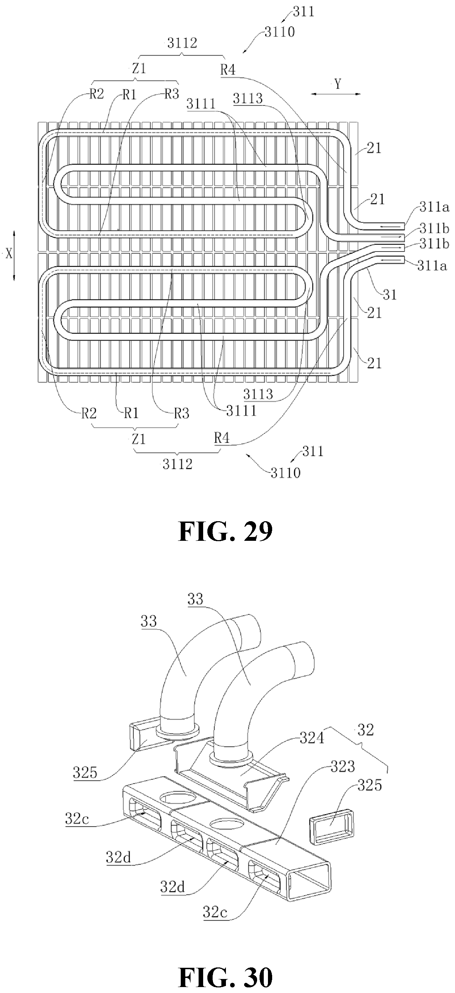

In some embodiments of the present application, as shown in FIG. 29 and FIG. 30, one current collector 32 is provided and includes a plurality of first channel ports 32c and a plurality of second channel ports 32d that are isolated from each other. The plurality of first channel ports 32c are in communication with each other, and the plurality of second channel ports 32d are in communication with each other. The plurality of first channel ports 32c are located on both sides of the plurality of second channel ports 32d respectively. First ends 311a of the plurality of heat exchange channels 311 correspond to and are connected to the plurality of first channel ports 32c one by one, and second ends 311b of the plurality of heat exchange channels 311 correspond to and are connected to the plurality of second channel ports 32d one by one. Thus, the number of the current collectors 32 can be reduced, allowing only one clearance space 10 to be formed and located in a concentrated position, which helps to reduce sealing difficulty, reduce assembly difficulty, improve production efficiency, and improve the reliability of the battery 100.

In some embodiments of the present application, as shown in FIG. 29 to FIG. 31, the current collector 32 includes a tube body 323, a partition structure 324, and a blocking structure 325. The partition structure 24 is disposed inside the tube body 323, and the blocking structure 325 blocks both ends of the tube body 323. The space inside the tube body 21 is divided into a first channel 3231 and a second channel 3232 by the partition structure 24. The first channel 3231 is in communication with the plurality of first channel ports 32c, and the second channel 3232 is in communication with the plurality of second channel ports 32d. Exemplarily, the first channel 3231 includes first portions located at both ends of the second channel 3232, and a second portion arranged corresponding to the second channel 3232 and enabling the two first portions to communicate. Thus, the current collector 32 has a simple structure and is convenient to process and produce. For example, a length direction of the tube body 323 may be perpendicular to an axial direction of the end of the heat exchange member 31 (i.e. the end that is in communication with the current collector 32).

In some embodiments of the present application, as shown in FIG. 28 and FIG. 29, the heat exchange member 31 includes at least one first heat exchange channel 3110. For example, at least one of the plurality of heat exchange channels 311 arranged in parallel above may be the first heat exchange channel 3110, or the heat exchange member 31 may further include only one heat exchange channel 311, which is the first heat exchange channel 3110.

The first heat exchange channel 3110 may include a first heat exchange section 3111, a second heat exchange section 3112 and a third heat exchange section 3113, the second heat exchange section 3112 is bent to form a first U-shaped region Z1, the first heat exchange section 3111 is disposed within the first U-shaped region Z1 in a bent mode, and is connected to the second heat exchange section 3112 in a bent mode through the third heat exchange section 3113, and the second heat exchange section 3112 is located on the outermost peripheral side of the first heat exchange channel 311.

Since the battery cells 21 located on the periphery are closer to the side wall of the case assembly 1 than the battery cells 21 located inside, the battery cells 21 on the periphery can dissipate heat more easily through the side wall and other structures of the case assembly 1. However, the battery cells 21 located inside have more difficulty in dissipating heat and are more affected by heat dissipation of adjacent battery cells 21. As a result, the heat dissipation of the battery cells 21 at different locations is different, which leads to a relatively uneven temperature distribution between the battery cells 21 on the periphery and the battery cells 21 inside the battery 100 after the battery 100 is in operation. This makes the battery 100 less stable during operation and the battery performance is prone to degradation.

In view of this, in the above technical solution, the second heat exchange section 3112 is bent to form the first U-shaped region Z1, the first heat exchange section 3111 is bent and disposed within the first U-shaped region Z1, and the second heat exchange section 3112 is arranged to be located on the outermost peripheral side of the first heat exchange channel 3110. Therefore, when the heat exchange member 31 and the battery cell assembly 2 in the present embodiment are adopted to exchange heat, at least a portion of the first U-shaped region Z1 formed by the peripheral second heat exchange section 3112 can be aligned with at least part of the battery cells 21 on the periphery of the battery 100, so that the second heat exchange section 3112 can exchange heat with the peripheral outer side of the battery cell assembly 2. The first heat exchange section 3111 within the first U-shaped region Z1 can be aligned with the internal battery cells 21, so that the heat exchange member 31 can compensate for an internal and external temperature difference caused by heat exchange between the peripheral battery cells 21 and the environment, making the heat exchange effect of the battery cells 21 on the periphery of the battery cell assembly 2 and the battery cells 21 inside the battery cell assembly 2 more consistent. This is beneficial for ameliorating the temperature difference of the battery cell assembly 2 in different environments, improving the temperature uniformity of the battery 100, and thus extending the service life of the battery 100 to a certain extent.

Exemplarily, when the heat exchange member 31 heats the battery cell assembly 2 for temperature rise, the heat exchange fluid may flow from the first heat exchange section 3111 to the second heat exchange section 3112, but the heat exchange fluid may also flow from the second heat exchange section 3112 to the first heat exchange section 3111. Exemplarily, when the heat exchange fluid flows from the second heat exchange section 3112 to the first heat exchange section 3111, it may first heat the battery cells 21 on the periphery of the battery cell assembly 2, and then cool the battery cells 21 in the middle of the battery cell assembly 2. Since the battery cells 21 on the periphery of the battery 100 dissipate more heat to the external environment, the temperature of the battery cells 21 on the periphery of the battery 100 drops more easily. By first heating the battery cells 21 on the periphery of the battery 100 with the heat exchange fluid, the heat exchange fluid with the higher temperature can increase the temperature of the battery cells 21 on the periphery while compensating for the heat lost by the battery cells 21 due to heat dissipation to the external environment, so that the heating requirement of the battery cells is met. The battery cells 21 in the middle of the battery cell assembly 2 have a small contact area with the external environment, resulting in less heat loss. The heat exchange fluid with the lower temperature flowing in the first heat exchange section 3111 can work with the heat generated by the battery cells 21 themselves to well meet their heating needs. As a result, the heating effect of the battery cells 21 on the periphery of the battery 100 and the battery cells 21 in the middle of the battery cell assembly 2 is basically the same. This makes the temperature of the battery cells 21 on the periphery of the battery 100 and the battery cells 21 in the middle of the battery cell assembly 2 more consistent after heating and temperature rise, resulting in a more uniform temperature distribution inside the battery 100.

Exemplarily, in the present embodiment, when the heat exchange member 31 dissipates heat of the battery cell assembly 2 for cooling, the heat exchange fluid may flow from the first heat exchange section 3111 to the second heat exchange section 3112, but the heat exchange fluid may also flow from the second heat exchange section 3112 to the first heat exchange section 3111. When the heat exchange fluid also flows from the first heat exchange section 3111 to the second heat exchange section 3112, the battery cells 21 in the middle of the battery 100 (i.e., internal battery cells 21 on the inner side of the periphery) may be cooled first, and then the battery cells 21 at the peripheral edge of the battery 100 are cooled. Since the heat dissipation of the battery cells 21 at the peripheral edge of the battery 100 is better than that of the internal battery cells 21, the heat exchange fluid with the lower temperature in the first heat exchange section 3111 can better meet the heat dissipation need of the battery cells 21 in the middle of the battery 100. Meanwhile, as the battery cells 21 at the peripheral edge can directly dissipate heat naturally to the external environment, when the heat exchange fluid in the second heat exchange section 3112 has a slightly higher temperature, the heat dissipation need of the peripheral battery cells 21 can still be met, so that the cooling effect on the battery cells 21 at the peripheral edge of the battery 100 and the battery cells 21 in the middle of the battery 100 is substantially consistent, and thus the battery cells 21 at the peripheral edge of the battery 100 and the battery cells 21 in the middle of the battery 100 have the relatively consistent temperature after cooling and heat dissipation, making the temperature distribution inside the battery 100 more uniform.

In some embodiments of the present application, as shown in FIG. 2 and FIG. 29, the battery cell assembly 2 includes a plurality of battery units 20 arranged along a first direction X, each battery unit 20 includes a plurality of battery cells 21 stacked sequentially along a second direction Y, and at least a portion of the second heat exchange section 3112 exchanges heat correspondingly with the plurality of battery cells 21 located at the outermost periphery of the battery cell assembly 2.

In the above technical solution, by coordinating the arrangement of the battery cells 21 and extending the arrangement of the first heat exchange channels 3110, and arranging at least a portion of the second heat exchange section 3112 to exchange heat correspondingly with the peripheral battery cells 21 (e.g., attached for heat transfer), the heat exchange efficiency of the peripheral battery cells 21 can be improved, thereby further balancing the temperature difference caused by the heat dissipation of the peripheral battery cells 21 being greater than that of the inner battery cells 21 of the battery 100.

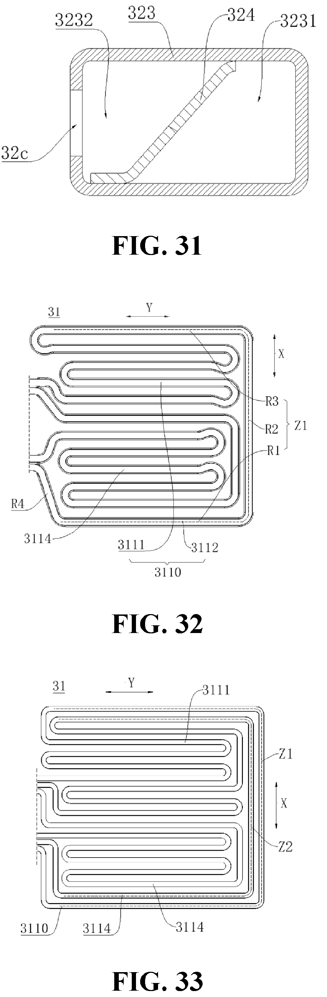

In some embodiments, with reference to FIG. 32, the second heat exchange section 3112 includes a first section R1, a second section R2 and a third section R3 that are sequentially bent and connected to form the first U-shaped region Z1. The first section R1 and the third section R3 both extend along the second direction Y, and the second section R2 extends along the first direction X. In the above technical solution, the coverage of the first U-shaped region Z1 can be relatively wide, which is beneficial for heat exchange of the peripheral battery cells 21 of the battery cell assembly 2 and further improves the temperature uniformity of the battery 100.

In some embodiments, with reference to FIG. 32, the second heat exchange section 3112 further includes a fourth section R4 connected to the first section R1 in a bent mode, the fourth section R4 and the second section R2 are disposed on two sides of the first section R1 along the second direction Y respectively, and the fourth section R4 extends in the first direction X towards the direction closer to the third section R3. Thus, the fourth section R4 can block at least part of the opening of the first U-shaped region Z1, so that the second heat exchange section 3112 located on the periphery of the first heat exchange channel 3110 can exchange heat with the battery cells 21 on the periphery of the battery cell assembly 2 over a larger range, further improving the temperature uniformity of the battery 100.

In some embodiments, with reference to FIG. 32 and FIG. 33, the heat exchange member 31 further includes at least one second heat exchange channel 3114, the second heat exchange channel 3114 and the first heat exchange channel 3110 are bent in the same plane, and the second heat exchange channel 3114 is arranged within the first U-shaped region Z1 in a bent mode.

For example, the embodiment of FIG. 32 shows one cooperation manner of one first heat exchange channel 3110 and one second heat exchange channel 3114, and the embodiment of FIG. 33 shows one cooperation manner of one first heat exchange channel 3110 and two second heat exchange channels 3114.

In the above technical solution, by arranging the at least one first heat exchange channel 3110 and the at least one second heat exchange channel 3114, and by coordinating their relative positions, the arrangement of the heat exchange channels can be designed flexibly according to the cooling requirements of the battery 100, thereby further optimizing the temperature regulation effect for the battery cell assembly and improving the temperature uniformity of the battery 100.

In some embodiments, with reference to FIG. 33, at least one second heat exchange channel 3114 is bent to form a second U-shaped region Z2, and at least a portion of the first heat exchange section 3111 is disposed within the second U-shaped region Z2 of the second heat exchange channel 3114.

For example, FIG. 33 shows that one second heat exchange channel 3114 is bent to form the second U-shaped region Z2, at least a portion of the first heat exchange section 3111 is disposed within the second U-shaped region Z2 of the second heat exchange channel 3114, and the othe second heat exchange channel 3114 is also disposed within the second U-shaped region Z2 of the second heat exchange channel 3114.

In the above technical solution, by arranging the at least one second heat exchange channel 3114 to be bent to form the second U-shaped region Z2, and disposing at least a portion of the first heat exchange section 3111 within the second U-shaped region Z2 of the second heat exchange channel 3114, coordination between the first heat exchange channel 3110 and the second heat exchange channel 3114 is facilitated, so that the temperature uniformity of the battery 100 is further improved.

In some embodiments of the present application, as shown in FIG. 2 and FIG. 29, the heat exchange member 31 includes at least one heat exchange tube 312 which extends in a bent mode, and each heat exchange tube 312 defines one heat exchange channel 311 inside. Thus, when the heat exchange member 31 includes a plurality of heat exchange tubes 312 which extend in a bent mode, the heat exchange member 31 includes a plurality of heat exchange channels 311. Exemplarily, the heat exchange tube 312 may be made of aluminum or steel, such as aluminum, so that the overall weight of the battery 100 is lighter.

Exemplarily, the heat exchange tube 312 is arc-bent at the bending position. The arc-bending can reduce the flow resistance of the fluid and reduce the pressure drop. Furthermore, the arc-bending of the heat exchange tube 312 at the bending position can increase the flow rate of the heat exchange fluid in the heat exchange channel 311, thereby increasing the heat exchange efficiency of the heat exchange member 31.

Exemplarily, the heat exchange tube 312 is of a flat tube structure. With reference to FIG. 23, the flat tube structure refers to a tube shape where a width m is greater than a thickness n. Typically, the heat exchange member used in the battery is of a double-layer brazed plate structure, that is, it is made of two layers of plates brazed together, forming a heat exchange channel between the two layers. Exemplarily, the flat tube can be formed by splicing multiple extruded tube segments. The thickness of the flat tube can be much smaller than the thickness of the double-layer brazed plate structure, thereby occupying less space, increasing the capacity of the battery 100, and reducing the weight, volume and cost of the battery 100.

Exemplarily, the heat exchange member 31 and the current collector 32 have at least a difference in a flow surface. For example, the cross-sectional area of the channel in the heat exchange member 31 is not consistent with the cross-sectional area of the channel in the current collector 32. In addition, the cross-sectional shape of the channel in the heat exchange member 31 and the cross-sectional shape of the channel in the collector 32 may also be inconsistent. For example, the current collector 32 may be in a short rectangular-solid empty box shape. When the heat exchange member 31 includes the flat tube structure and the heat exchange channel 311 is defined inside the flat tube structure, the cross-sectional dimension and shape of the heat exchange channel 311 are inconsistent with the cross-sectional dimension and shape of the current collector 32.

According to an embodiment in a second aspect of the present application, an embodiment of the present application further provides an electrical apparatus. The electrical apparatus includes the battery 100 in any solution above, and the battery 100 is configured to provide electric energy for the electrical apparatus. The electrical apparatus may be any equipment or system employing the battery 100. The performance of the battery 100 is improved, so that the working power utilization performance of the electrical apparatus is favorably improved.

The battery 100 according to a specific embodiment of the present application is described below.

The battery 100 includes: a case assembly 1, a batter cell assembly 2, and a heat exchange assembly 3. The case assembly 1 includes: a case 11 and a case cover 12. The case 11 is a sheet metal integrally-stamped part and includes a bottom wall 113 and a surrounding wall 114 to form a stamped box shape with an open top. The battery cell assembly 2 is disposed inside the case 11, and the case cover 12 is disposed at the top of the case 11.

The case 11 is internally provided with a first expansion beam 13, a second expansion beam 14 and a third expansion beam 15. The length directions of the first expansion beam 13, the second expansion beam 14 and the third expansion beam 15 all extend along a first direction X. The first expansion beam 13, the second expansion beam 14 and the third expansion beam 15 are arranged at intervals in sequence along a second direction Y. A part of the battery cell assembly 2 is disposed between the first expansion beam 13 and the second expansion beam 14, and the remaining part of the battery cell assembly 2 is disposed between the second expansion beam 14 and the third expansion beam 15.

The space inside the case 11 is divided into a first space 111 and a second space 112 located on both sides of the first expansion beam 13. The first space 111 is the space on the side of the first expansion beam 13 in the second direction Y for installing the battery cell assembly 2. The second space 112 is the space on the side of the first expansion beam 13 in the second direction Y away from the battery cell assembly 2. The second space 112 may be used to install a battery management system and/or a high-voltage case, etc. It is worth noting that the first direction X and the second direction Y are perpendicular, with one being a length direction of the case 11 and the other being a width direction of the case 11. A height direction of the case 11 is a third direction Z, which is perpendicular to the first direction X and the second direction Y, i.e., a spacing direction between the bottom wall 113 and the case cover 12.

A clearance space 10 is formed between the first expansion beam 13 and the case 11. The clearance space 10 includes a first clearance portion 131 and a second clearance portion 1131. The first clearance portion 131 is formed on the first expansion beam 13 and is formed as a recessed structure which is recessed towards the direction of the second space 112. The first clearance portion 131 is open towards the direction of the first space 111, and the side of the first clearance portion 131 facing the bottom wall 113 of the case 11 is open. The second clearance portion 1131 is formed on the case 11 and is formed by recessing of an upper surface of the bottom wall 113 of the case 11. At least a portion of the second clearance portion 1131 is located below the first expansion beam 13.

The first expansion beam 13 includes an outer beam plate 135, an inner beam plate 134, and a reinforcing plate 136. The inner beam plate 134 is disposed closer to the battery cell assembly 2 relative to the outer beam plate 135 and abuts against the battery cell assembly 2. The reinforcing plate 136 is supported between the outer beam plate 135 and the inner beam plate 134. The first clearance portion 131 includes a first recessed portion 1341 formed on the inner beam plate 134 and recessed in a direction away from the battery cell assembly 2. The first clearance portion 131 also includes a second recessed portion 1361 formed on the reinforcing plate 136 and recessed in a direction away from the first recessed portion 1341. The second recessed portion 1361 corresponds to the first recessed portion 1341. The inner beam plate 134 is provided with a first through hole 1342, the reinforcing plate 136 is provided with a second through hole 1362, and the outer beam plate 135 is provided with a third through hole 1352. The second clearance portion 1131 includes a first groove segment 11311 located below the first expansion beam 13 and a second groove segment 11312 disposed away from the second space 112 relative to the first groove segment 11311. A size W of the second groove segment 11312 is larger than a size V of the current collector 32 in a direction from the first groove segment 11311 to the second groove segment 11312.

The heat exchange assembly 3 includes a heat exchange member 31, a collector 32, and an adapter 33 disposed within the case 11. The heat exchange member 31 is located between the bottom wall 113 of the case 11 and the battery cell assembly 2, so that the heat exchange member 31 and the battery cell assembly 2 can exchange heat. A bottom surface of the current collector 32 is lower than a bottom surface of the heat exchange member 31. The current collector 32 is embedded in the first groove segment 11311 and located in the clearance space 10. The end of the heat exchange member 31 near the second space 112 extends into the current collector 32, so that the heat exchange member 31 is in communication with the current collector 32. The adapter 33 is in the form of a bent pipe, with one end located in the clearance space 10 and penetrating through a top wall of the current collector 32, so that the adapter 33 is in communication with the current collector 32. The other end penetrates through the first through hole 1342, the second through hole 1362, and the third through hole 1352 and extends into the second space 112. The heat exchange member 31 includes at least one heat exchange tube 312 which extends in a bent mode, one heat exchange channel 311 is defined in each heat exchange tube 312, and the heat exchange tube 312 is of a flat tube structure. When the case 11 is stamped, a sink 1132 matching with the heat exchange tube 312 in shape is formed in an upper surface of the bottom wall 113.

During assembly, the first expansion beam 13 and the second expansion beam 14 are first welded onto the stamped case 11 to obtain a first assembly. Then, the first assembly is subjected to electrophoresis. After that, the heat exchange assembly 3 is installed into the first assembly. Specifically, the entire heat exchange assembly 3 may be placed downwards into the case 11, with the current collector 32 located in the second groove segment 11312. Then, the heat exchange assembly 3 is pushed entirely towards the direction of the first expansion beam 13, so that the current collector 32 enters the first groove segment 11311. The end of the adapter 33 penetrates through the first through hole 1342, the second through hole 1362 and the third through hole 1352. Then, the third expansion beam 15 is installed in the case 11 and located above the heat exchange assembly 31. The battery cell assembly 2 may be installed later. Thus, the heat exchange assembly 3 is easy and convenient to assemble, and the current collector 32 and the adapter 33 can occupy as little space as possible in the second space 112, which increases the space utilization rate. In addition, the in-cavity structure of the first expansion beam 13 is strong, which is beneficial to the protection of the current collector 32 and the adapter 33.

It should be noted that since the first expansion beam needs to be welded to the case before the electrophoresis process, the heat exchange assembly need to be installed after the first expansion beam. The design considers extending the entire current collector from below the first expansion beam into the second space along the direction from the first space to the second space. At this time, the current collector will not only occupy the second space, but the passing action also requires a large gap to be arranged on the first expansion beam or the bottom plate of the case, which increases the sealing difficulty. In addition, the passing action also requires a turning operation, which makes the operation more difficult.

In the embodiments of the present application, by forming the aforementioned clearance space 10 between the first expansion beam 13 and the case 11 to accommodate the current collector 32, the heat exchange assembly 3 can be moved horizontally to be installed, so that the operation difficulty is low. Furthermore, the current collector 32 does not occupy the space of the second space 112, thus increasing the space utilization rate. In addition, the holes in the first expansion beam 13 can be reduced, which helps to reduce the sealing difficulty and improve the sealing effect. Besides, given the size optimization of the second space 112, the size of the first space 111 can be relatively increased, thereby increasing the number of the battery cells 21 within the first space 111, further increasing the volumetric energy density of the battery 100.

It should be noted that the embodiments in the present application and features in the embodiments can be combined with each other in the case of not conflicting.

The above descriptions are merely preferred embodiments of the present application and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery, comprising:
a case assembly, comprising a case and a first expansion beam arranged in the case, a space in the case being divided into a first space and a second space by the first expansion beam;
a battery cell assembly, being arranged in the case and located in the first space, an end of the battery cell assembly abutting against the first expansion beam; and
a heat exchange assembly, being arranged on the case assembly and comprising a heat exchange member, a current collector and an adapter, the heat exchange member and the battery cell assembly being arranged to allow heat exchange, the heat exchange member being in communication with the current collector, and the adapter being in communication with the current collector;
wherein a clearance space is formed between the first expansion beam and the case or on the first expansion beam, the current collector and the adapter are both arranged in the case, and at least one of the current collector and the adapter is at least partially located in the clearance space.

2. The battery according to claim 1, wherein a side surface of the first expansion beam facing the first space is a first surface, at least a portion of the current collector is located in the clearance space, and a side surface of the current collector near the first space is flush with the first surface, or is disposed closer to the second space relative to the first surface.

3. The battery according to claim 1 or 2, wherein a side surface of the first expansion beam facing the second space is a second surface, at least a portion of the current collector is located in the clearance space, and a side surface of the current collector near the second space is flush with the second surface, or is disposed closer to the first space relative to the second surface.

4. The battery according to any one of claims 1 to 3, wherein the current collector is located in the clearance space, one end of the adapter is located in the clearance space and penetrates into the current collector to be in communication with the current collector, and the other end of the adapter extends into the second space.

5. The battery according to claim 4, wherein the adapter penetrates through the first expansion beam so that the other end of the adapter extends into the second space.

6. The battery according to any one of claims 1 to 5, wherein the clearance space comprises a first clearance portion formed on the first expansion beam, and the first clearance portion opens towards the direction of the first space.

7. The battery according to claim 6, wherein the first clearance portion is formed as a recessed structure that is recessed towards the direction of the second space.

8. The battery according to claim 7, wherein the first expansion beam comprises an outer beam plate and an inner beam plate, the inner beam plate is away from the second space relative to the outer beam plate and abuts against the battery cell assembly, the first clearance portion comprises a first recessed portion formed on the inner beam plate, and the first recessed portion is recessed towards the direction of the second space.

9. The battery according to claim 8, wherein the first expansion beam further comprises a reinforcing plate supported between the outer beam plate and the inner beam plate, the first clearance portion further comprises a second recessed portion formed on the reinforcing plate, and the second recessed portion corresponds to the first recessed portion and is recessed towards the direction away from the first recessed portion.

10. The battery according to claim 9, wherein an open area of a side of the first recessed portion facing the first space is smaller than an open area of a side of the second recessed portion close to the first space.

11. The battery according to any one of claims 8 to 10, wherein the current collector is located in the clearance space, the adapter is in a bend form with one end located in the clearance space and penetrating through a top wall of the current collector, while the other end penetrating through the first expansion beam and extending into the second space, a top wall of the first recessed portion is provided with an upper concave portion, and the upper concave portion accommodates the adapter.

12. The battery according to claim 11, wherein the first expansion beam comprises the outer beam plate and the inner beam plate arranged sequentially in a direction from the second space to the first space, and the reinforcing plate supported between the outer beam plate and the inner beam plate, the inner beam plate is provided with a first through hole, the reinforcing plate is provided with a second through hole, the outer beam plate is provided with a third through hole, and the first through hole, the second through hole, and the third through hole correspond to each other and are used for penetration by the adapter.

13. The battery according to any one of claims 6 to 10, wherein the side surface of the first expansion beam facing the first space is the first surface, a filler is provided at the first clearance portion, and an outer surface of the filler is flush with the first surface.

14. The battery according to any one of claims 6 to 13, wherein a side of the first clearance portion facing a bottom wall of the case is open.

15. The battery according to any one of claims 6 to 14, wherein the first expansion beam is constructed as a continuous beam that is continuous at a position corresponding to the clearance space.

16. The battery according to any one of claims 1 to 5, wherein the first expansion beam comprises a first beam, the first beam comprises a plurality of beam segments spaced apart in a length direction of the first expansion beam, and the clearance space comprises a gap arranged between every two adjacent beam segments.

17. The battery according to claim 16, wherein the first expansion beam further comprises a second beam, and the second beam is disposed away from the second space relative to the first beam, blocks the gaps and abuts against the battery cell assembly.

18. The battery according to claim 17, wherein the second beam is an extruded hollow beam.

19. The battery according to any one of claims 1 to 18, wherein the clearance space comprises a second clearance portion, the second clearance portion is formed by recessing of an upper surface of the bottom wall of the case, at least a portion of the second clearance portion is located below the first expansion beam, and at least a portion of the current collector is embedded in the second clearance portion.

20. The battery according to claim 19, wherein the second clearance portion comprises a first groove segment located below the first expansion beam and a second groove segment disposed away from the second space relative to the first groove segment, and a size of the second groove segment is larger than a size of the current collector in a direction from the first groove segment to the second groove segment.

21. The battery according to any one of claims 1 to 20, wherein the heat exchange member is located inside the case and between the bottom wall of the case and the battery cell assembly.

22. The battery according to claim 21, wherein a bottom surface of the current collector is lower than a bottom surface of the heat exchange member, and an end of the heat exchange member near the second space penetrates through a side wall of the current collector facing the first space.

23. The battery according to claim 21 or 22, wherein an upper surface of the bottom wall has a recessed sink, and the heat exchange member is in embedded fitting with the sink.

24. The battery according to any one of claims 21 to 23, wherein an insulating layer is provided on each of the upper surface of the bottom wall and an outer surface of the heat exchange member, and insulating adhesives fill a space between the bottom wall and the battery cell assembly.

25. The battery according to any one of claims 21 to 24, further comprising: at least one of a first temperature regulating element, a second temperature regulating element, and a third temperature regulating element, wherein
the first temperature regulating element is disposed inside the case assembly and at a top of the battery cell assembly;
the second temperature regulating element is disposed between large surfaces of adjacent battery cells in the battery cell assembly; and
the third temperature regulating element is disposed outside the case and located below the bottom wall of the case.

26. The battery according to any one of claims 1 to 20, wherein the case assembly comprises a bottom protective plate located under the case, and the heat exchange member is located outside the case and between the bottom wall of the case and the bottom protective plate.

27. The battery according to claim 26, wherein the heat exchange member is connected to the current collector via a connecting pipe that penetrates through the bottom wall.

28. The battery according to claim 27, wherein the case assembly further comprises:
a seal, wherein the seal is located between the bottom wall and the bottom protective plate in sealing fit and comprises an outer periphery arranged surrounding the heat exchange member, and the connecting pipe, corresponding to an in-ring region of the outer periphery, penetrates through the bottom wall.

29. The battery according to any one of claims 26 to 28, wherein a base adhesive layer is provided between the heat exchange member and the bottom wall, and a base adhesive layer is provided between the heat exchange member and the bottom protective plate.

30. The battery according to any one of claims 26 to 29, wherein the heat exchange member comprises at least one heat exchange tube which extends in a bent mode, and the case assembly further comprises:
a foaming element, wherein the foaming element is disposed between the bottom wall and the bottom protective plate, and comprises a first foaming portion disposed around the heat exchange member, and a second foaming portion disposed between adjacent tube segments of the same heat exchange tube or between adjacent heat exchange tubes.

31. The battery according to claim 30, wherein the foaming element is connected to the bottom protective plate, and an upper surface of the heat exchange member is higher than an upper surface of the foaming element.

32. The battery according to any one of claims 26 to 31, further comprising: at least one of a first temperature regulating element, a second temperature regulating element, and a fourth temperature regulating element, wherein
the first temperature regulating element is disposed inside the case assembly and at a top of the battery cell assembly;
the second temperature regulating element is disposed between large surfaces of adjacent battery cells in the battery cell assembly; and
the fourth temperature regulating element is disposed inside the case and located between the bottom wall and the battery cell assembly.

33. The battery according to any one of claims 1 to 32, wherein the case is an integrally stamped part and comprises the bottom wall and a surrounding wall, with the heat exchange member laid on the bottom wall.

34. The battery according to any one of claims 1 to 33, wherein the heat exchange member comprises a plurality of heat exchange channels arranged in parallel.

35. The battery according to claim 34, wherein two current collectors are provided, namely a first current collector and a second current collector, a first end of each heat exchange channel converges to and communicates with the first current collector, and a second end of each heat exchange channel converges to and communicates with the second current collector.

36. The battery according to claim 34, wherein one current collector is provided and comprises a plurality of first channel ports and a plurality of second channel ports that are isolated from each other, the plurality of first channel ports are in communication with each other, the plurality of second channel ports are in communication with each other, the plurality of second channel ports are located on both sides of the plurality of first channel ports respectively, first ends of the plurality of heat exchange channels correspond to and are connected to the plurality of first channel ports one by one, and second ends of the plurality of heat exchange channels correspond to and are connected to the plurality of second channel ports one by one.

37. The battery according to any one of claims 1 to 36, wherein the heat exchange member comprises at least one first heat exchange channel, the first heat exchange channel comprises a first heat exchange section, a second heat exchange section and a third heat exchange section, the second heat exchange section is bent to form a first U-shaped region, the first heat exchange section is disposed within the first U-shaped region in a bent mode, and is connected to the second heat exchange section in a bent mode through the third heat exchange section, and the second heat exchange section is located on the outermost peripheral side of the first heat exchange channel.

38. The battery according to claim 37, wherein the battery cell assembly comprises a plurality of battery units arranged along a first direction, each battery unit comprises a plurality of battery cells stacked sequentially along a second direction, and at least a portion of the second heat exchange section exchanges heat correspondingly with the plurality of battery cells located at the outermost periphery of the battery cell assembly.

39. The battery according to claim 37 or 38, wherein the heat exchange member further comprises at least one second heat exchange channel, the second heat exchange channel and the first heat exchange channel are bent in the same plane, and the second heat exchange channel is arranged within the first U-shaped region of the first heat exchange channel in a bent mode.

40. The battery according to claim 39, wherein at least one second heat exchange channel is bent to form a second U-shaped region, and at least a portion of the first heat exchange section is disposed within the second U-shaped region of the second heat exchange channel.

41. The battery according to any one of claims 1 to 40, wherein the heat exchange member comprises at least one heat exchange tube which extends in a bent mode, one heat exchange channel is defined in each heat exchange tube, and the heat exchange tube is of a flat tube structure.

42. An electrical apparatus, comprising the battery according to any one of claims 1 to 41.
